# EUROPÄISCHE PATENTSCHRIFT

(11) **EP 3 909 121 B1**
(45) Veröffentlichungstag und Bekanntmachung des Hinweises auf die Patenterteilung: **17.12.2025**
(21) Anmeldenummer: 20715677.9
(22) Anmeldetag: 16.03.2020
(51) Int. Cl.: H02K 15/066

(54) **VERFAHREN UND VORRICHTUNG ZUM MEHRLAGIGEN EINFÜGEN EINER SPULENMATTE IN EIN BAUTEIL EINER ELEKTRISCHEN MASCHINE**
METHOD AND DEVICE FOR MULTI-LAYER INSERTION OF A COIL MAT INTO A COMPONENT OF AN ELECTRICAL MACHINE
PROCÉDÉ ET DISPOSITIF POUR RÉALISER UNE INSERTION MULTICOUCHE D'UN MAT DE BOBINE DANS UN COMPOSANT D'UNE MACHINE ÉLECTRIQUE

(30) Priorität: 15.03.2019 DE 102019106711
(43) Veröffentlichungstag der Anmeldung: 17.11.2021
(73) Patentinhaber: Grob-Werke GmbH & Co. KG, 87719 Mindelheim (DE)
(72) Erfinder: RAUSCHER, Ralf, 87748 Fellheim (DE); FENDT, Simon, 87757 Kirchheim (DE)
(74) Vertreter: KASTEL Patentanwälte PartG mbB
(86) Internationale Anmeldenummer: PCT/DE2020/100194
(87) Internationale Veröffentlichungsnummer: WO 2020/187363

(56) Entgegenhaltungen:
- DE-A1- 102016 222 818
- US-B2- 9 071 115

## Beschreibung

Die Erfindung betrifft ein Verfahren zum mehrlagigen Einfügen einer Spulenmatte in nach innen offene Aufnahmenuten eines zumindest bereichsweise ringförmigen Bauteils einer elektrischen Maschine. Weiter betrifft die Erfindung eine Vorrichtung zum mehrlagigen Einfügen einer Spulenmatte in nach innen offene Aufnahmenuten eines zumindest bereichsweise ringförmigen Bauteils einer elektrischen Maschine.

Die Erfindung liegt auf dem Gebiet von elektrischen Maschinen wie beispielsweise Elektromotoren oder Generatoren. Wenigstens ein Bauteil einer solchen elektrischen Maschine, wie z.B. ein Stator oder ein Rotor, weist eine Spulenwicklung auf. Bei einer Verfahrensweise zum Herstellen eines Bauteils mit einer solchen Spulenwicklung wird eine solche Spulenwicklung außerhalb des Bauteils vorgefertigt und dann in das Bauteil eingefügt.

Beispielsweise wird eine Wellenwicklung außerhalb des Bauteils, wie insbesondere eines Stators, vorgefertigt, z.B. als eine lineare Spule.

Beispiele für eine derartige lineare Spule oder Spulenmatte sind in der DE 10 2017 104 932, der DE 103 28 955 B4 oder der DE 11 2006 000 742 A1 sowie der DE 10 2016 222 818 A1 erläutert. Dabei können die einzelnen Drähte ineinander verwoben sein, wie dies in der DE 10 2017 104 932 dargestellt ist, einzeln übereinandergestapelt sein, wie in der DE 103 28 955 B4 dargestellt ist, oder es kann auch ein Leitertausch vorgesehen sein, wie dies in der DE 11 2006 000 742 A1 erläutert ist. Auch kann die Spulenmatte eine variable Nutteilung aufweisen, so dass geradlinige Drahtabschnitte der Spulenmatte in unterschiedlichen Abschnitten unterschiedliche Drahtabstände zueinander aufweisen, wie dies in der DE 10 2016 222 818 A1 erläutert ist.

DE 10 2016 222 818 A1 offenbart:
Verfahren zum mehrlagigen Einfügen einer Spulenmatte in nach innen offene Aufnahmenuten eines zumindest bereichsweise ringförmigen Bauteils einer elektrischen Maschine, umfassend: a) Bereitstellen einer Spulenmatte, die geradlinige Drahtabschnitte und Wickelköpfe, die geradlinige Drahtabschnitte verbinden, derart aufweist, dass ein zum Bilden einer ersten Lage der Spulenmatte in dem Bauteil bestimmter erster Längenabschnitt der Spulenmatte erste geradlinige Drahtabschnitte aufweist, die mit einem ersten Drahtabstand beabstandet sind, und ein zum Bilden einer zweiten Lage der Spulenmatte in dem Bauteil bestimmter zweiter Längenabschnitt der Spulenmatte zweite geradlinige Drahtabschnitte aufweist, die mit einem unterschiedlichen zweiten Drahtabstand beabstandet sind.

Ein Beispiel für eine Vorrichtung und ein Verfahren zum Einfügen einer Spulenmatte in Aufnahmenuten eines Stators ist aus der EP 1 639 688 B1 bekannt. Weitere Beispiele finden sich in der WO 2016/021674 A1, der US 9 071 115 B2 und der DE 10 2016 111 478 A1.

In der US 9 071 115 B2 und DE 10 2016 113 894 A1 ist das Einfügen einer Spulenwicklung mit einem Fügedorn beschrieben. Bei der US 9 071 115 B2 wird dabei eine

Spulenmatte vorher auf den Fügedorn aufgerollt, dieser dann in das Bauteil gefahren und anschließend in die Nuten des Bauteils überführt.

Aus der DE 10 2016 113 894 A1 ist dem Fachmann ein Fügewerkzeug in Form eines Fügedorns mit beweglichen Leitblechen bekannt. Das Fügewerkzeug wird zusammen mit außerhalb des Fügewerkzeugs vorgesehenen Greifeinheiten verwendet. In einem Zustand, in dem die Spulenmatte auf dem Fügewerkzeug aufgebracht ist, welches sich noch axial versetzt zu dem Stator befindet, wird die Spulenmatte auf dem Fügewerkzeug mittels eines Sternmotors auf einen kleineren Durchmesser als der Innendurchmesser des Stators komprimiert. An den Greifeinheiten vorgesehene Greifelemente werden radial nach innen bewegt, was dazu dient, die Drähte der Spulenmatte radial außenseitig zu halten und nach innen zu drücken. Dies erlaubt ein Zurückziehen des Sternmotors, da letztlich die Greifeinheiten eine Haltefunktion übernehmen. Das Greifen erfolgt dabei an zwei axialen Enden der Drähte der Spulenmatte. Das Fügewerkzeug mit der so komprimiert gehaltenen Spulenmatte wird axial in den Stator eingefügt. Anschließend wird die Spulenmatte durch außerhalb des Fügewerkzeugs vorgesehene, von radial innen an den axialen Enden der Spulenmatte angreifende Elemente durch Bewegung dieser Elemente radial nach außen von dem Fügewerkzeug in die Nuten des Stators überführt. Gemäß einer weiteren Ausführung kann das Komprimieren auf dem Fügewerkzeug anstelle mit einem Sternmotor auch mit den zusätzlich zu dem Fügewerkzeug vorgesehenen Greifeinheiten erfolgen.

Demnach offenbart die DE 10 2016 113 894 A1 bereits ein Verfahren zum mehrlagigen Einfügen einer Spulenmatte in nach innen offene Aufnahmenuten eines zumindest bereichsweise ringförmigen Bauteils einer elektrischen Maschine, umfassend:
a) Bereitstellen einer Spulenmatte, die geradlinige Drahtabschnitte und Wickelköpfe, die geradlinige Drahtabschnitte verbinden, aufweist,
b) Aufbringen der Spulenmatte (10) auf ein Fügewerkzeug (14), das an einem Außenumfangsbereich (64) mit in der Lage einstellbaren Leitblechen versehen ist, zwischen denen nach außen hin offene Fügewerkzeugnuten gebildet sind, wobei die geradlinigen Drahtabschnitte in die Fügewerkzeugnuten eingeführt werden,
f) Einfügen des Fügewerkzeugs in das Bauteil und Ausrichten der Fügewerkzeugnuten zu den Aufnahmenuten,
g) Überführen der geradlinigen Drahtabschnitte aus den Fügewerkzeugnuten in die Aufnahmenuten, hier mit zusätzlich zu dem Fügewerkzeug vorgesehenen Greifeinheiten.

Ausgehend von dem Stand der Technik der DE 10 2016 113 894 A1 ist es Aufgabe der Erfindung, ein Verfahren und eine Vorrichtung bereitzustellen, mit der eine Spulenwicklung in ein zumindest bereichsweise ringförmiges Bauteil einer elektrischen Maschine derart einfügbar ist, dass Spannungen in Drähten der Spulenmatte verringert werden und dass das Einfügen prozesssicherer mit erhöhter Zuverlässigkeit und einer geringeren Gefahr der Beschädigung von Drähten oder deren Isolierung erfolgen kann.

Zum Lösen dieser Aufgabe schafft die Erfindung ein Verfahren nach Anspruch 1 sowie eine Vorrichtung nach dem Nebenanspruch.

Vorteilhafte Ausgestaltungen sind Gegenstand der Unteransprüche.

Die Erfindung schafft gemäß einem Aspekt davon ein Verfahren zum mehrlagigen Einfügen einer Spulenmatte in nach innen offene Aufnahmenuten eines zumindest bereichsweise ringförmigen Bauteils einer elektrischen Maschine, umfassend:
a) Bereitstellen einer Spulenmatte, die geradlinige Drahtabschnitte und Wickelköpfe, die geradlinige Drahtabschnitte verbinden, derart aufweist, dass ein zum Bilden einer ersten Lage der Spulenmatte in dem Bauteil bestimmter erster Längenabschnitt der Spulenmatte erste geradlinige Drahtabschnitte aufweist, die mit einem ersten Drahtabstand beabstandet sind, und ein zum Bilden einer zweiten Lage der Spulenmatte in dem Bauteil bestimmter zweiter Längenabschnitt der Spulenmatte zweite geradlinige Drahtabschnitte aufweist, die mit einem unterschiedlichen zweiten Drahtabstand beabstandet sind,
b) Aufrollen des ersten Längenabschnitts der Spulenmatte auf ein Fügewerkzeug, das an einem Außenumfangsbereich mit in der Lage einstellbaren Greifelementen versehen ist, zwischen denen nach außen hin offene Fügewerkzeugnuten gebildet sind, wobei die ersten geradlinigen Drahtabschnitte in die Fügewerkzeugnuten eingeführt werden,
c) Verändern des Nutabstandes der Fügewerkzeugnuten zur Anpassung an den zweiten Drahtabstand,
d) Aufrollen des zweiten Längenabschnitts der Spulenmatte unter Einfügen der zweiten geradlinigen Drahtabschnitte in die Fügewerkzeugnuten und anschließend Einfahren des Fügewerkzeugs auf einen kleineren Aussendurchmesser mit dem das Fügewerkzeug in das Bauteil eintauchen kann;
f) Einfügen des Fügewerkzeugs in das Bauteil und Ausrichten der Fügewerkzeugnuten zu den Aufnahmenuten,
g) Überführen der geradlinigen Drahtabschnitte aus den Fügewerkzeugnuten in die Aufnahmenuten.

Unter "Spulenmatte" wird eine mattenartige Anordnung mindestens eines Leiters, vorzugsweise mehrerer Leiter, verstanden, welche als vorgefertigte Spulenwicklung in ein Bauteil einer elektrischen Maschine, wie z.B. einen Stator, zum Bilden der Spulenwicklung dieses Bauteils einfügbar ist. Die Spulenmatte kann aus einzelnen miteinander verwobenen, gestapelten oder ineinander gesteckten Drähten gebildet sein. Die Spulenmatte kann auch aus mehreren Einzelmatten oder Teilmatten zusammengestellt sein, die übereinander oder hintereinander angeordnet werden, um die Spulenmatte zu bilden.

Insbesondere soll eine verteilte Wellenwicklung für eine E-Maschine oder einen Generator gebildet werden.

Hierzu wird zunächst eine Spulenmatte bereitgestellt, um sie in das Bauteil einzufügen.

Eine Spulenmatte kann beispielsweise durch eine einteilige oder mehrteilige lineare Spule gebildet sein. Eine Spulenmatte kann auch aus mehreren Teilmatten zusammengesetzt sein.

Eine Spulenmatte weist mehrere geradlinige Drahtabschnitte auf, die zum Einfügen in Nuten des Bauteils, wie beispielsweise in Statornuten eines Stators, dienen. Beispielsweise ist eine Spulenmatte aus mehreren einzelnen S-förmig gebogenen isolierten Kupferstäben gebildet. Die geradlinigen Drahtabschnitte sind über Wicklungsköpfe verbunden. Zum Beispiel springt im sogenannten Wickelkopf der Draht eine entsprechende Anzahl von Nuten. Dieser Sprung wird oft als Spulensprung bezeichnet. Es können z.B. gleiche Spulensprünge in einer Matte verwendet werden; es sind jedoch auch unterschiedliche Spulensprünge auf einer oder beiden Seiten möglich, je nach angestrebter elektrischer Verschaltung.

Solche S-förmig gebogene Kupferstäbe oder sonstige Drähte, welche auch unterschiedlich in der Kopfgeometrie und Spulensprung gestaltet sein können, bilden gemeinsam die Spule bzw. Spulenmatte. Bei einer Ausgestaltung ist eine Spulenmatte so ausgebildet, dass diese später in dem Bauteil, wie insbesondere im Stator, in jeder Nut gleich viele Leiter besitzt. Dabei können in einem linearen Zustand der Spulenmatte die geradlinigen Drahtabschnitte derjenigen Drähte, welche sich später in der gleichen Nut befinden, übereinanderliegen.

Dabei kann die Spulenmatte durchgängig sein, so dass die Längenabschnitte Teilabschnitte der durchgängigen Spulenmatte sind. Die Spulenmatte kann aber auch aus Teilmatten gebildet sein. Dabei können eine oder mehrere der Teilmatten jeweils den ersten und den zweiten Längenabschnitt haben. Bei einer anderen Ausgestaltung kann der erste Längenabschnitt an einer ersten Teilmatte und der zweite Längenabschnitt an einer zweiten Teilmatte ausgebildet sein. Die Spulenmatte oder deren Teilmatten können z.B. aus Wellenwicklungsdrähten gebildet sein, die als Flachwicklung in einer Ebene wellenförmig gebogen sind und alternierend erste und zweite Wickelköpfe mit unterschiedlichen Biegerichtungen aufweisen. Die Spulenmatte oder deren Teilmatten können z.B. auch durch Schwertwicklung gebildet sein, wobei vorzugsweise mehrere parallele Drähte auf einem z.B. wie ein Schwert geformten Wickelkern aufgewickelt werden. Auch kann eine Spulenmatte (oder deren Teilmatten) aus sogenannten Hairpins aufgebaut sein, wobei Wickelköpfe auf einer Seite durch Biegen geformt sind und auf der anderen Seite Drahtenden miteinander durch eine geeignete Verbindungstechnik, wie z.B. Schweißen, verbunden sind.

Es sind auf unterschiedlichen Längenabschnitten unterschiedliche Abstände zwischen den geradlinigen Drahtabschnitten vorgesehen. Hierdurch sind die Abstände entsprechend einer später unterschiedlichen radialen Lage der ersten und zweiten Drahtabschnitte in einer Nut an die entsprechend der unterschiedlichen Radialposition unterschiedlichen Umfangsabstände der Nuten angepasst. So lassen sich Spannungen in den Drähten der Spulenmatten aufgrund unterschiedlicher Umfangsabstände wegen unterschiedlicher radialer Positionen vermeiden. Weiter lässt sich auch das Fügewerkzeug an die unterschiedlichen Abstände zwischen den geradlinigen Drahtabschnitten anpassen. Dadurch können die Drähte auch beim Überführen möglichst spannungsfrei gehandhabt werden.

Zum Aufrollen der Spulenmatte werden Fügenuten des Fügewerkzeugs verändert, um das Fügewerkzeug an die Drahtabstände anzupassen.

Vorzugsweise umfasst das Verfahren:
u) Verwenden eines Fügewerkzeugs mit segmentartigen Greifelementen, die radial verschiebbar sind, und radiales Verstellen der Greifelemente, um die Nutbreite, den Außenumfang und den Nutabstand zu verändern.

Vorzugsweise umfasst das Verfahren:
v) Verändern des Durchmessers des Fügewerkzeugs an dem Außenumfangbereich, um den Nutabstand zu verändern.

Vorzugsweise umfasst das Verfahren:
w) Anpassen eines Abstands einer Drehachse des Fügewerkzeugs zu einem noch aufzurollenden Abschnitt der Spulenmatte abhängig von einer Änderung des Durchmessers des Außenumfangbereichs.

Vorzugsweise umfasst das Verfahren den Schritt:
e1) Fixieren wenigstens eines Bereichs der Spulenmatte in dem Fügewerkzeug durch Verkleinern der Nutbreite wenigstens einiger oder aller der Fügewerkzeugnuten, um darin eingefügte Drahtabschnitte festzuhalten.

Vorzugsweise umfasst das Verfahren den Schritt:
e2) Lösen der Spulenmatte von dem Fügewerkzeug durch Vergrößerung der Nutbreite, um darin festgehaltene Drahtabschnitte zu lösen.

Gemäß einer bevorzugten Ausgestaltung umfasst Schritt e1) den Schritt:
e1.1) Verkleinern der Nutbreiten zum Festklemmen von Drahtabschnitten zwischen den Greifelementen.

Gemäß einer bevorzugten Ausgestaltung umfasst Schritt e1) den Schritt:
e1.2) Verkleinern der Nutbreiten zum formschlüssigen Festhalten von Drahtabschnitten hinter Vorsprüngen an Greifelementen an der Öffnung der Führungswerkzeugnuten.

Gemäß einer bevorzugten Ausgestaltung umfasst Schritt e1) den Schritt:
e.1.3) Verkleinern der Nutbreiten durch Durchführen wenigstens einer der Schritte u), v) und/oder w) und Verkleinern des Durchmessers des Außenumfangs des Fügewerkzeug um mehr als 1%.

Gemäß einer bevorzugten Ausgestaltung umfasst Schritt e2) den Schritt: Vergrößern der Nutbreiten durch Durchführen wenigstens einer der Schritte u), v) und/oder w) und Vergrößern des Durchmessers des Außenumfangs um mehr als 1%.

Es ist bevorzugt, dass der Schritt e1) vor und/oder während Schritt f) durchgeführt wird und dass Schritt e2) nach Schritt f) und vor und/oder während Schritt g) durchgeführt wird.

Es ist bevorzugt, dass Schritt a) den Schritt umfasst:
a1) Bereitstellen der Spulenmatte auf einem sich linear erstreckenden kammartigen Übertragungswerkzeug derart, dass eine oder mehrere Spulenmattenlagen einer Spulenmatte oder mehrerer Teilmatten auf einer Kammstruktur mit zwischen Zinken der Kammstruktur positionierten geradlinigen Drahtabschnitten gehalten sind.

Es ist bevorzugt, dass Schritt a) den Schritt umfasst:
a2) Bereitstellen der Spulenmatte derart, dass ein erster geradliniger Drahtabschnitt an dem Ende des ersten Längenabschnitts und ein zweiter geradliniger Drahtabschnitt an dem Anfang des zweiten Längenabschnitts mit einem Übergangsdrahtabstand beabstandet sind, dessen Wert zwischen dem ersten Drahtabstand und dem zweiten Drahtabstand liegt.

Es ist bevorzugt, dass Schritt a) den Schritt umfasst:
a3) Bereitstellen der Spulenmatte derart, dass der erste geradlinige Drahtabschnitt an dem Ende des ersten Längenabschnitts und der zweite geradlinige Drahtabschnitt an dem Anfang des zweiten Längenabschnitts mit einem Übergangsdrahtabstand beabstandet sind, dessen Wert dem Mittelwert des ersten Drahtabstands und des zweiten Drahtabstands plus/minus 10% entspricht.

Es ist bevorzugt, dass Schritt a) den Schritt umfasst:
a4) Bereitstellen der Spulenmatte derart, dass der erste Drahtabstand dem Drahtabstand der ersten geradlinigen Drahtabschnitte bei deren bestimmungsgemäßen Gebrauch in dem Bauteil entspricht und dass der zweite Drahtabstand dem Drahtabstand der zweiten geradlinigen Drahtabschnitte bei deren bestimmungsgemäßen Gebrauch in dem Bauteil entspricht.

Es ist bevorzugt, dass Schritt b) den Schritt umfasst:
b1) Anpassen des Nutabstandes der Fügewerkzeugnuten an den ersten Drahtabstand.

Es ist bevorzugt, dass Schritt b) den Schritt umfasst:
b2) Abrollen des Fügewerkzeuges mit seinem kreisförmigen Außenumfang über die linear ausgelegte oder sich linear bewegende Spulenmatte.

Es ist bevorzugt, dass Schritt b) den Schritt umfasst:
b3) Abrollen des Fügewerkzeuges mit seinem kreisförmigen Außenumfang über das sich relativ zu dem Fügewerkzeug linear bewegende lineare Übertragungswerkzeug gemäß Schritt a1).

Es ist bevorzugt, dass Schritt b) den Schritt umfasst:
b4) Anpassen des Abstandes des Außenumfangs zu dem linearen Übertragungswerkzeug gemäß Schritt a1) durch Veränderung des Abstandes der Drehachse des Fügewerkzeugs zu dem linearen Übertragungswerkzeug.

Es ist bevorzugt, dass Schritt b) den Schritt umfasst:
b5.1 radiales Bewegen der ersten Drahtabschnitte in die Fügewerkzeugnuten.

Es ist bevorzugt, dass Schritt b) den Schritt umfasst:
b5.2 Anpassen der Nutbreite auf ein schiefes Einfädeln der ersten Drahtabschnitte und Einfügen der ersten Drahtabschnitte durch Abrollen ohne radiales Bewegen der ersten Drahtabschnitte.

Es ist bevorzugt, dass Schritt d) den Schritt umfasst:
d1) Anpassen des Nutabstandes der Fügewerkzeugnuten an den zweiten Drahtabstand.

Es ist bevorzugt, dass Schritt d) den Schritt umfasst:
d2) Abrollen des Fügewerkzeuges mit seinem kreisförmigen Außenumfang über die linear ausgelegte oder sich linear bewegende Spulenmatte.

Es ist bevorzugt, dass Schritt d) den Schritt umfasst:
d3) Abrollen des Fügewerkzeuges mit seinem kreisförmigen Außenumfang über das sich relativ zu dem Fügewerkzeug linear bewegende lineare Übertragungswerkzeug gemäß Schritt a1).

Es ist bevorzugt, dass Schritt d) den Schritt umfasst:
d4) Anpassen des Abstandes des Außenumfangs zu dem linearen Übertragungswerkzeug gemäß Schritt a1) durch Veränderung des Abstandes der Drehachse des Fügewerkzeugs zu dem linearen Übertragungswerkzeug.

Es ist bevorzugt, dass Schritt d) den Schritt umfasst:
d5.1 radiales Bewegen der zweiten Drahtabschnitte in die Fügewerkzeugnuten.

Es ist bevorzugt, dass Schritt d) den Schritt umfasst:
d5.2 Anpassen der Nutbreite auf ein schiefes Einfädeln der zweiten Drahtabschnitte und Einfügen der zweiten Drahtabschnitte durch Abrollen ohne radiales Bewegen der zweiten Drahtabschnitte.

Es ist bevorzugt, dass Schritt c) den Schritt umfasst:
c1) Verändern des Nutabstand zur Anpassung an den Übergangsdrahtabstand gemäß Schritt a2) oder a3) und anschließend Verändern des Nutabstands zur Anpassung an den zweiten Drahtabstand.

Es ist bevorzugt, dass Schritt c) den Schritt umfasst:
c2) Verändern des Nutabstandes während eines Stoppens einer relativen Linearbewegung zwischen Fügewerkzeug und Spulenmatte.

Es ist bevorzugt, dass Schritt c) den Schritt umfasst:
c3) Verändern des Nutabstandes während einer kontinuierlichen relativen Linearbewegung zwischen Fügewerkzeug und Spulenmatte.

Es ist bevorzugt, dass Schritt c) den Schritt umfasst:
c4) Verändern des Nutabstandes abhängig von der Geometrie der Spulenmatte.

Gemäß einem weiteren Aspekt schafft die Erfindung eine Vorrichtung zum mehrlagigen Einfügen einer Spulenmatte in nach innen offene Aufnahmenuten eines zumindest bereichsweise ringförmigen Bauteils einer elektrischen Maschine umfassend: ein Spulenmattenbereitstelleinrichtung zum Bereitstellen einer Spulenmatte, die geradlinige Drahtabschnitte und Wickelköpfe, die geradlinige Drahtabschnitte verbinden, derart aufweist, dass ein zum Bilden einer ersten Lage der Spulenmatte in dem Bauteil bestimmter erster Längenabschnitt der Spulenmatte erste geradlinige Drahtabschnitte aufweist, die mit einem ersten Drahtabstand beabstandet sind, und ein zum Bilden einer zweiten Lage der Spulenmatte in dem Bauteil bestimmter zweiter Längenabschnitt der Spulenmatte zweite geradlinige Drahtabschnitte aufweist, die mit einem unterschiedlichen zweiten Drahtabstand beabstandet sind,
ein um eine Drehachse relativ zu der Spulenmatte und/oder dem Bauteil drehbares Fügewerkzeug, das an einem Außenumfangsbereich mit in der Lage einstellbaren Greifelementen versehen ist, zwischen denen nach außen hin offene Fügewerkzeugnuten gebildet sind,
eine Aufrolleinrichtung zum Aufrollen der Spulenmatte auf das Fügewerkzeug derart, dass die geradlinigen Drahtabschnitte in die Fügewerkzeugnuten eingeführt werden,
eine Überführungseinrichtung zum Einfügen des Fügewerkzeugs in das Bauteil, Ausrichten der Fügewerkzeugnuten mit den Aufnahmenuten und Überführen der geradlinigen Drahtabschnitte von den Fügewerkzeugnuten in die Aufnahmenuten,
und eine Steuerung, die dazu eingerichtet ist, den Nutabstand der Fügewerkzeugnuten zwischen einem Aufrollen des ersten Längsabschnittes auf das Fügewerkzeug und einem Aufrollen des zweiten Längsabschnittes auf das Fügewerkzeug zur Anpassung an den zweiten Drahtabstand zu verändern und das Fügewerkzeug nach dem Aufrollen auf einen kleineren Durchmesser einzufahren, mit dem das Fügewerkzeug in das Bauteil eintauchen kann, um dann die geradlinigen Drahtabschnitte in die Aufnahmenuten zu überführen.

Es ist bevorzugt, dass das Fügewerkzeug segmentartige Greifelemente aufweist, die radial verschiebbar sind und dass die Steuerung dazu eingerichtet ist, die Greifelemente radial zu verstellen, um die Nutbreite, den Außenumfang und den Nutabstand zu verändern.

Es ist bevorzugt, dass der Durchmesser des Fügewerkzeugs an dem Außenumfangbereich veränderbar ist, um den Nutabstand zu verändern.

Vorzugsweise umfasst die Vorrichtung eine Fügewerkzeugbewegungseinrichtung zum relativen Bewegen der Drehachse des Fügewerkzeugs zu der Spulenmatte, wobei die Steuerung dazu eingerichtet ist, den Abstand der Drehachse des Fügewerkzeugs zu einem noch aufzurollenden Abschnitt der Spulenmatte abhängig von einer Änderung des Durchmessers des Außenumfangbereichs anzupassen.

Es ist bevorzugt, dass die Steuerung dazu eingerichtet ist, zum Fixieren wenigstens eines Bereichs der Spulenmatte in dem Fügewerkzeug die Nutbreite wenigstens einiger oder aller der Fügewerkzeugnuten zu verkleinern, um darin eingefügte Drahtabschnitte festzuhalten und/oder zum Lösen der Spulenmatte die Nutbreite zu vergrößern, um darin festgehaltene Drahtabschnitte zu lösen.

Es ist bevorzugt, dass die Steuerung dazu eingerichtet ist, die Nutbreiten zum Festklemmen von Drahtabschnitten zwischen den Greifelementen zu verkleinern.

Es ist bevorzugt, dass wenigstens einige der Greifelemente jeweils wenigstens einen Vorsprung aufweisen, der die zugeordnete Fügewerkzeugnut im Öffnungsbereich verengt und dass die Steuerung dazu eingerichtet ist, die Nutbreiten zum formschlüssigen Festhalten von Drahtabschnitten hinter den Vorsprüngen der Greifelemente zu verkleinern.

Es ist bevorzugt, dass der Verstellbereich des Durchmessers des Außenumfangs des Fügewerkzeug mehr als 1% des Durchmessers beträgt, um ein Verklemmen und Lösen der Drahtabschnitte zwischen den Greifelementen zu bewirken.

Es ist bevorzugt, dass die Steuerung dazu eingerichtet ist, das Festhalten der Drahtabschnitte durch Verkleinerung der Nut vor und während einer Überführung des Fügewerkzeugs in das Bauteil zu bewirken.

Es ist bevorzugt, dass die Spulenmattenbereitstelleinrichtung ein sich linear erstreckendes kammartiges Übertragungswerkzeug zum Halten einer oder mehrerer Spulenmattenlagen einer Spulenmatte oder mehrerer Teilmatten auf einer Kammstruktur mit zwischen Zinken der Kammstruktur positionierten geradlinigen Drahtabschnitten aufweist, wobei das kammartige Übertragungswerkzeug relativ zu dem Fügewerkzeug linear in Richtung seiner Erstreckungsrichtung bewegbar ist.

Bevorzugt vorgesehen ist eine Vorrichtung aufweisend eine Datenverarbeitungseinheit mit einem darin geladenenen Computerprogrammprodukt oder Computerprogramm, umfassend maschinenlesbare Steueranweisungen, die die Vorrichtung (40) veranlassen, die Schritte des Verfahrens nach einer oben erläuterten Ausgestaltung durchzuführen.

Gemäß einem weiteren Aspekt betrifft die Erfindung ein Computerprogrammprodukt oder Computerprogramm umfassend maschinenlesbare Steueranweisungen, die, wenn in die
Datenverarbeitungseinheit der Vorrichtung einer der voranstehenden Ausgestaltungen geladen, die Vorrichtung veranlassen, die Schritte des Verfahrens nach einer oben erläuterten Ausgestaltung durchzuführen.

Ausführungsbeispiele der Erfindung werden im Folgenden anhand der beigefügten Zeichnungen näher erläutert. Darin zeigt:
- Fig. 1: eine Draufsicht auf ein Beispiel für eine Spulenmatte;
- Fig. 2: eine schematische Darstellung eines Übertragungswerkzeugs und eines Fügewerkzeugs zum Verdeutlichen eines Schritts in einem Verfahren zum mehrlagigen Einfügen einer Spulenmatte in Aufnahmenuten eines Bauteils einer elektrischen Maschine;
- Fig. 3: eine schematische Ansicht in axialer Richtung auf ein Ausführungsbeispiel eines solchen Bauteils einer elektrischen Maschine mit Aufnahmenuten und einer darin eingefügten Spulenmatte, wobei die Spulenmatte durchgängig aus einer Einzelmatte gebildet ist, die mehrlagig eingefügt ist, so dass sie in dem Bauteil eine erste bis dritte Wicklungslage einnimmt;
- Fig. 4: eine Ansicht vergleichbar der Fig. 3, wobei die Spulenwicklung aus einer Spulenmatte gebildet ist, die aus einer ersten bis dritten Teilmatte gebildet ist, wobei jede Teilmatte jeweils eine der ersten bis dritten Wicklungslage bildet;
- Fig. 5: eine Ansicht vergleichbar der Fig. 3, wobei die Spulenwicklung aus einer Spulenmatte gebildet ist, die aus einer ersten und einer zweiten Teilmatte gebildet ist, von denen jede Teilmatte mit unterschiedlichen Längsabschnitten eine unterschiedliche Wicklungslage einnimmt;
- Fig. 6: eine Ansicht vergleichbar der Fig. 3 bis 5, wobei die Spulenmatte aus einer ersten bis dritten Teilmatte gebildet ist, wobei jede Teilmatte mit unterschiedlichen Längsabschnitten unterschiedliche Wicklungslagen einnimmt;
- Fig. 7: eine Ansicht vergleichbar der Fig. 3 bis 6, wobei die Spulenmatte aus einer ersten bis vierten Teilmatte gebildet ist, die jeweils unterschiedliche Wicklungslagen innerhalb des Bauteils einnehmen;
- Fig. 8: eine schematische Ansicht eines Teilbereichs der Spulenmatte, wobei eine Halbwicklung an einem in einer ersten Wicklungslage in dem Bauteil im Vergleich zu einer Halbwicklung in einer dritten Wicklungslage in dem Bauteil dargestellt ist, um unterschiedliche Umfangsabstände zu verdeutlichen;
- Fig. 9: eine schematische Darstellung eines Fügewerkzeugs und eines Bauteils bei einem zweiten Schritt des Verfahrens;
- Fig. 10: eine Ansicht vergleichbar der Fig. 9 bei einem dritten Schritt des Verfahrens;
- Fig. 11: ein Beispiel für das Übertragungswerkzeug und ein Beispiel für ein starres Fügewerkzeug zur Verdeutlichung einer Problematik bei dem Verfahren;
- Fig. 12: ein weiteres Beispiel für das Übertragungswerkzeug sowie ein Beispiel für ein einstellbares Fügewerkzeug zur Verdeutlichung einer weiteren Problematik bei dem Verfahren;
- Fig. 13: ein Beispiel für ein Übertragungswerkzeug und ein einstellbares Fügewerkzeug bei einem ersten Schritt einer Ausführungsform des Verfahrens gemäß der Erfindung;
- Fig. 14: die Anordnung von Fig. 13 bei einem weiteren Schritt des Verfahrens;
- Fig. 15: die Anordnung von Fig. 14 bei noch einem weiteren Schritt des Verfahrens;
- Fig. 16: die Anordnung von Fig. 14 bei noch einem weiteren Schritt des Verfahrens;
- Fig. 17: die Anordnung von Fig. 15 bei noch einem weiteren Schritt des Verfahrens;
- Fig. 18: eine Anordnung vergleichbar der Fig. 13 bis 17 gemäß einem weiteren Ausführungsbeispiel des Verfahrens und einer Vorrichtung zum Durchführen des Verfahrens gemäß der Erfindung;
- Fig. 19 u. 20: das einstellbare Fügewerkzeug in zwei Einstellungen zur Erläuterung von weiteren Verfahrensschritten gemäß weiteren Ausführungsformen des erfindungsgemäßen Verfahrens; und
- Fig. 21: ein Teilbereich eines weiteren Fügewerkzeugs zur Verdeutlichung einer weiteren Ausführungsform des erfindungsgemäßen Verfahrens.

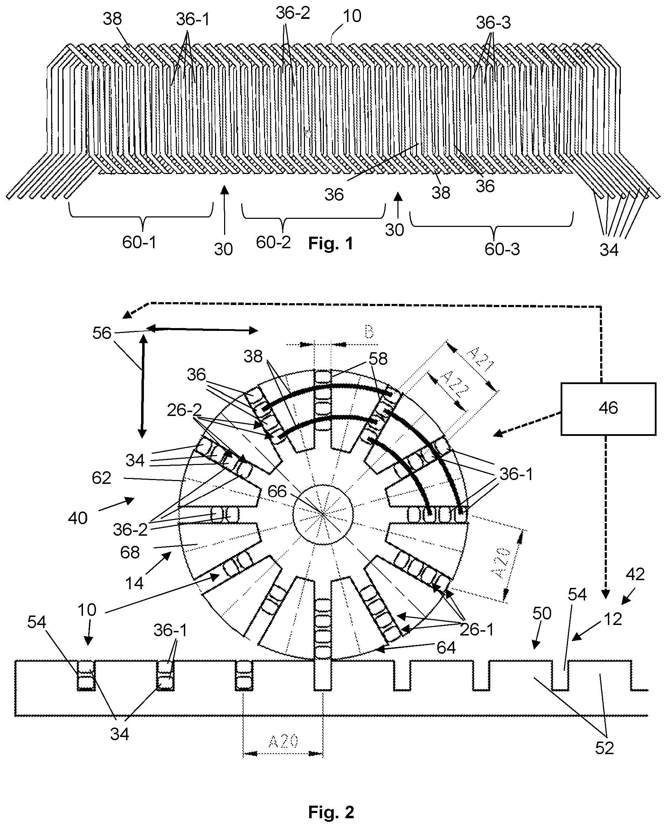

Im Folgenden werden Ausführungsbeispiele von Verfahren und Vorrichtungen 40 zum mehrlagigen Einfügen einer Spulenmatte 10 in nach innen offene Aufnahmenuten 24 eines zumindest bereichsweise ringförmigen Bauteils 16 einer elektrischen Maschine beschrieben, mit denen sich Spulenmatten 10 einfügen lassen, die mit geringen inneren Spannungen in dem Bauteil 16, beispielsweise einem Stator 20, aufgenommen sind, wobei gleichzeitig ein gleichmäßig hoher Wickelkopf 38 vorgesehen sein soll. Hierzu sind in unterschiedlichen Längenabschnitten 60-1, 60-2, 60-3 sowie eventuell in Übergangsbereichen 30 dazwischen unterschiedliche Kopfgeometrien der Wickelköpfe 38 vorgesehen, welche geradlinige Drahtabschnitte 36-1, 36-2, 36-3 gleich im passenden Drahtabstand zueinander halten. In Fig. 1 ist ein Beispiel für eine Spulenmatte 10 zum Bilden einer Spulenwicklung 18 eines Bauteils 16 einer elektrischen Maschine dargestellt. Fig. 2 zeigt ein Übertragungswerkzeug 12 und ein Fügewerkzeug 14 zum Einfügen der Spulenmatte 10 in das Bauteil 16.

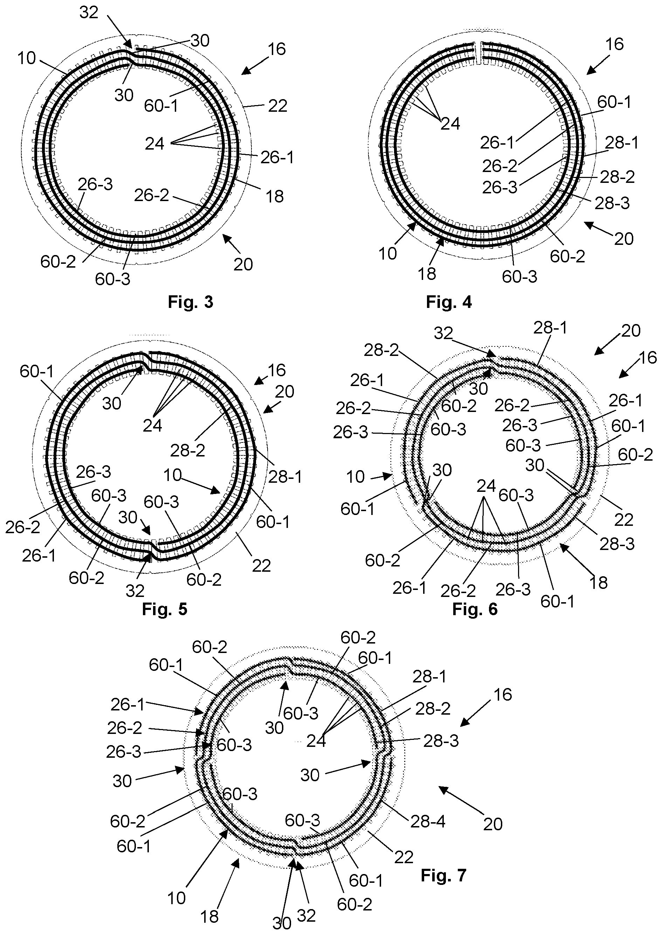

Die Fig. 3 bis 7 zeigen unterschiedliche Ausführungsformen eines Bauteils 16, welches zumindest bereichsweise ringförmig ausgebildet ist und mit einer durch eine Spulenmatte 10 gebildeten Spulenwicklung 18 versehen ist.

Das Bauteil 16 ist beispielsweise ein Stator 20 einer elektrischen Maschine, wie insbesondere eines Elektromotors oder Generators, und mehr insbesondere eines Elektromotors, welcher als Fahrmotor in einem Kraftfahrzeug einsetzbar ist und eine Nennleistung zwischen 10 kW und 400 kW hat.

Der Stator 20 hat ein ringförmiges Gehäuse 22, welches beispielsweise als Blechpaket ausgebildet ist, wobei an einem Innenumfang nach innen offene Aufnahmenuten 24 zum Aufnehmen der Spulenwicklung 18 ausgebildet sind.

Hierzu ist die Spulenmatte 10 mehrlagig in die Aufnahmenuten 24 eingefügt.

Bei den in Fig. 3 bis 7 dargestellten Ausführungsbeispielen ist in dem Bauteil 16 die Spulenwicklung 18 mit einer ersten Wicklungslage 26-1, einer zweiten Wicklungslage 26-2 und einer dritten Wicklungslage 26-3 dargestellt; es können auch mehr oder weniger Wicklungslagen vorgesehen sein.

Die Spulenmatte 10 kann dabei, wie in Fig. 3 dargestellt, durchgängig aus einer Einzelmatte gebildet sein, die in mehreren Lagen in das Bauteil 16 eingefügt ist.

Bei dem in Fig. 3 dargestellten Ausführungsbeispiel ist die als Einzelmatte ausgebildete Spulenmatte 10 mehrlagig eingefügt, so dass diese als Einzelmatte ausgebildete Spulenmatte 10 die erste Wicklungslage 26-1, die zweite Wicklungslage 26-2 und die dritte Wicklungslage 26-3 einnimmt.

Bei dem in Fig. 4 dargestellten Ausführungsbeispiel ist die Spulenmatte 10 aus einer ersten Teilmatte 28-1, einer zweiten Teilmatte 28-2 und einer dritten Teilmatte 28-3 gebildet, wobei die erste Teilmatte 28-1 die erste Wicklungslage 26-1 einnimmt, die zweite Teilmatte 28-2 die zweite Wicklungslage 26-2 einnimmt und die dritte Teilmatte 28-3 die dritte Wicklungslage 26-3 einnimmt. Demnach ist hier eine Spulenmatte 10 aus mehreren Teilmatten 28-1, 28-2, 28-3 gezeigt, wobei kein Lagensprung 32 stattfindet.

Bei dem in Fig. 5 dargestellten Ausführungsbeispiel ist die Spulenmatte 10 aus einer ersten Teilmatte 28-1 und einer zweiten Teilmatte 28-2 gebildet, wobei die Teilmatten 28-1, 28-2 jeweils unterschiedliche Wicklungslagen 26-1, 26-2 und 26-3 einnehmen. Dabei findet an Übergangsbereichen 30 ein Lagensprung 32 innerhalb der Spulenmatte 10 statt.

Fig. 6 zeigt ein weiteres Ausführungsbeispiel des Stators 20, wobei die Spulenwicklung 18 aus einer Spulenmatte 10 gebildet ist, wobei bei dieser Ausführungsform der Spulenmatte 10 eine erste Teilmatte 28-1, eine zweite Teilmatte 28-2 und eine dritte Teilmatte 28-3 vorgesehen sind. Auch bei diesen Teilmatten 28-1, 28-2, 28-3 findet in Übergangsbereichen 30 ebenfalls ein Sprung der Lage der einzelnen Teilmatten 28-1, 28-2, 28-3 von einer Wicklungslage 26-1, 26-2, 26-3 in eine andere Wicklungslage 26-2, 26-3, 26-1 statt.

Vergleichbar hierzu ist der Aufbau der Spulenmatte 10 gemäß dem Ausführungsbeispiel von Fig. 7, wobei jedoch die Spulenmatte 10 nicht nur aus drei Teilmatten 28-1, 28-2, 28-3 sondern aus mehr Teilmatten besteht. Zum Beispiel ist zusätzlich zu der ersten bis dritten Teilmatte 28-1 bis 28-3 eine vierte Teilmatte 28-4 vorgesehen.

Der Aufbau und die Herstellung der einzelnen Spulenmatten 10 können unterschiedlich sein. Beispielsweise sind die Spulenmatte 10 und deren Teilmatten aus Wellenwicklungsdrähten gebildet, wie dies im Einzelnen in den internationalen Patentanmeldungen mit dem internationalen Aktenzeichen PCT/DE 2019/100178 sowie PCT/DE 2019/100179 beschrieben und gezeigt ist. Andere Ausgestaltungen der Spulenmatte 10 sind durch Schwertwicklung, beispielsweise durch das in der WO 2019/020148 A1 näher erläuterte und gezeigte Verfahren, hergestellt und werden durch eine entsprechende Spulenmattenherstellvorrichtung (hier nicht dargestellt) bereitgestellt.

Wie in Fig. 1 dargestellt, wird die als Wellenwicklung ausgebildete Spulenwicklung 18 außerhalb des Bauteils 16 vorgefertigt, beispielsweise als eine lineare Spule - Beispiel für eine Spulenmatte 10.

Die Spulenmatte 10 weist mehrere Leiter in Form von gebogenen Drähten auf. Insbesondere weist die Spulenmatte 10 mehrere einzelne S-förmig gebogene isolierte Kupferstäbe auf, die die Drähte 34 bilden. Die Kupferstäbe sind vorzugsweise mit einer unrunden Profilform ausgebildet und beispielsweise mit einem Rechteckprofil versehen, wie dies z.B. in Fig. 2 zu sehen ist.

Wie in Fig. 1 dargestellt, weist die Spulenmatte 10 geradlinige Drahtabschnitte 36 und Wickelköpfe 38 auf. Ein Wickelkopf 38 verbindet zwei geradlinige Drahtabschnitte 36 so, dass diese einen bestimmten Abstand zueinander haben. Beispielsweise springt ein Draht 34 bei Durchlaufen eines Wickelkopfes 38 um mehrere Nuten, beispielsweise fünf Nuten, weiter.

Der jeweilige geradlinige Drahtabschnitt 36 befindet sich somit später in einer der Aufnahmenuten 24. In einem Wickelkopf 38 springt der Draht 34 eine entsprechende Anzahl von Aufnahmenuten 24. Dieser Sprung wird oft als Spulensprung bezeichnet. Es ist möglich, eine Spulenmatte 10 vorzusehen, in der gleiche Spulensprünge verwendet werden. Bei anderen Ausgestaltungen weist die Spulenmatte 10 auch unterschiedliche Spulensprünge auf einer oder auch auf beiden Seiten auf, je nach später angestrebter elektrischer Verschaltung.

Die einzelnen, beispielsweise aus S-förmig gebogenen Kupferstäben gebildeten, Drähte 84, welche auch unterschiedlich in der Wickelkopfgeometrie des Wickelkopfes 38 und in dem Spulensprung gestaltet sein können, bilden gemeinsam die Spulenmatte 10. Dabei ist bevorzugt, dass die Spulenmatte 10 so ausgebildet ist, dass diese später in dem Bauteil 16 - siehe z.B. die Fig. 3 bis 7 - in jeder Aufnahmenut 24 gleich viele Leiter besitzt. Bei einer Ausgestaltung der Spulenmatte 10 liegen in dem linearen Zustand die geradlinigen Drahtabschnitte 36, welche sich später in der gleichen Nut befinden, übereinander.

Fig. 2 zeigt eine Vorrichtung 40 zum mehrlagigen Einfügen einer solchen Spulenmatte 10 in die nach innen offenen Aufnahmenuten 24 des Bauteils 16. Die Vorrichtung 40 weist eine Spulenmattenbereitstelleinrichtung 42 zum Bereitstellen der Spulenmatte 10 und ein Fügewerkzeug 14 zum Einfügen der Spulenmatte 10 in das Bauteil 16 auf. Weiter weist die Vorrichtung 40 eine Steuerung 46 zur Steuerung der Bewegungsabläufe auf. Die Spulenmattenbereitstelleinrichtung 42 weist in einigen Ausführungsbeispielen ein lineares Übertragungswerkzeug 12 auf. Das Übertragungswerkzeug 12 erstreckt sich beispielsweise linear und ist kammartig ausgebildet und dient zum Halten einer oder mehrerer Spulenmattenlagen der Spulenmatte 10. Beispielsweise können darauf die Teilmatten 28-1, 28-2, 28-3 gehalten werden. Hierzu weist das Übertragungswerkzeug 12 eine Kammstruktur 50 mit Zinken 52 und dazwischen gebildeten Übertragungswerkzeugnuten 54 auf.

Das Fügewerkzeug 14 ist mittels einer beispielsweise durch einen Roboterarm oder dergleichen gebildete, in den Figuren nur schematisch angedeutete Fügewerkzeugbewegungseinrichtung 56 relativ zu dem Übertragungswerkzeug 12 bewegbar, so dass das Fügewerkzeug 14 über das Übertragungswerkzeug 12 gerollt werden kann. An einem Außenumfang des Fügewerkzeuges 14 sind Fügewerkzeugnuten 58 zum Aufnehmen der geradlinigen Drahtabschnitte 36 der Spulenmatte 10 vorgesehen. In alternativen Ausgestaltungen kann jedoch auch durch das Übertragungswerkzeug 12 eine lineare Bewegung durchgeführt werden.

Wie in Fig. 2 dargestellt, wird zur Aufnahme der Spulenmatte 10 das Übertragungswerkzeug 12 mit den Übertragungswerkzeugnuten 54 verwendet, wobei die Übertragungswerkzeugnuten 54 einen Nutabstand A20 entsprechend einem Drahtabstand A20 zwischen zwei benachbarten geradlinigen Drahtabschnitten 36 aufweist. Für das Übertragen rollt das rotatorische Fügewerkzeug 14 auf dem Übertragungswerkzeug 12 ab, und dabei wird die Spulenmatte 10 von dem Übertragungswerkzeug 12 in das Fügewerkzeug 14 übertragen. Beim Abrollen wird das Übertragungswerkzeug 12 relativ zu dem Fügewerkzeug linear bewegt. Dies kann z.B. mittels der Fügewerkzeugbewegungseinrichtung 56 geschehen.

Wie in Fig. 2 zu erkennen, ist es für ein zuverlässiges Übertragen vorteilhaft, dass die Nutabstände A20 zwischen den Übertragungswerkzeugnuten 54 und den Fügewerkzeugnuten 58 des Fügewerkzeuges 14 übereinstimmen. In Fig. 2 ist zur Verdeutlichung eine lineare Spulenmatte 10 mit zwei Drähten 34 übereinander dargestellt.

Die Spulenmatte 10 wird in das Fügewerkzeug 14 zu einer rotatorischen Spulenwicklung 18 mit zwei Umschlingungen überführt, so dass pro Fügewerkzeugnut 14 vier geradlinige Drahtabschnitte 36 aufgenommen sind. Dies ist nur ein Beispiel, die Spulenmatte 10 kann auch mehr oder weniger Leiter je Nut haben; auch in dem Fügewerkzeug 14 sind je nach Spulenmatte 10 und Anzahl der Umschlingungen unterschiedliche Anzahlen von Drähten 34 pro Nut möglich.

Zu Darstellungszwecken wurde das auch als Fügedorn bezeichenbare Fügewerkzeug 14 absichtlich mit sehr wenigen Fügewerkzeugnuten 58 gezeichnet, um einen Effekt eines sich verändernden Nutabstandes in Abhängigkeit der radialen Position der Drähte 34 in der Fügewerkzeugnut 48 deutlicher darstellen zu können. Es ist erkennbar, dass sich der Nutabstand A20, A21, A22 verändert, wenn der Draht tiefer in dem rotatorischen Fügewerkzeug 14 positioniert wird. Liegen die Drähte 34 relativ weit außen in dem Fügewerkzeug 14, ergibt sich ein Nutabstand an dieser Position von A21, welcher nahezu identisch ist zu A20. A20 ist hier der Nutabstand am äußeren Umfang des Fügewerkzeugs 14.

Bei mehreren Umschlingungen der Spulenmatte 10 bzw. deren Lagen oder Teilmatten 28-1, 28-2, 28-3 liegen jedoch auch Drähte 34 wesentlich tiefer in der Fügewerkzeugnut 58, wodurch sich dadurch auch ein wesentlich kleinerer Nutabstand A22 ergibt.

Würden hierzu die Abstände zwischen in linearer bzw. Umfangsrichtung benachbarter geradliniger Drahtabschnitte 36 beim Aufnehmen derselben verändert, hat dies zur Folge, dass sich die Wickelköpfe 38, welche die Drahtabschnitte 36 verbinden, verformen. Die dabei erforderlichen Kräfte zur Verformung würden über die seitlichen Nutflächen des Fügewerkzeuges 14 in die geradlinigen Drahtabschnitte 36 während der Gleitbewegung eingeleitet, was zu Beschädigungen an der Drahtisolierung führen kann.

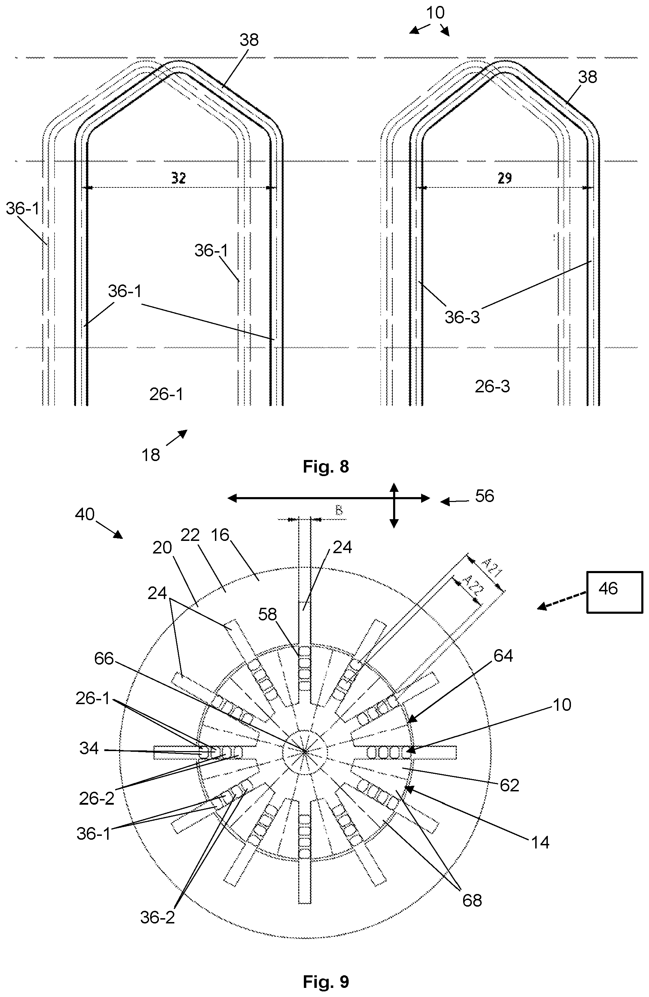

In Fig. 8 ist eine Veränderung der Lagen der geradlinigen Drahtabschnitte 36 je nach Wicklungslage 26-1, 26-2, 26-3 verdeutlicht. Links ist dabei ein Wickelkopf 38 mit damit verbundenen ersten geradlinigen Drahtabschnitten 36-1 dargestellt, die in der ersten Wicklungslage 26-1 in dem Stator 20 zu liegen kommen, während rechts ein Wickelkopf 38 mit dritten geradlinigen Drahtabschnitten 36-3 dargestellt ist, die in der dritten Wicklungslage 26-3 zu liegen kommen. In der ersten Wicklungslage 26-1 haben die ersten geradlinigen Drahtabschnitte 36-1 einen beispielhaften Abstand von 32 mm, während die dritten geradlinigen Drahtabschnitte 36-3 in der dritten Wicklungslage 26-3 beispielsweise einen Abstand von 29 mm zueinander haben.

Damit sich die Wickelköpfe 38 in dem in den Fig. 3 bis 7 dargestellten eingefügten Zustand nicht verformen und nicht unter Spannung anliegen, weist die Spulenmatte 10 von Fig. 1 einen ersten Längenabschnitt 60-1, einen zweiten Längenabschnitt 60-2 und einen dritten Längenabschnitt 60-3 auf. In dem ersten Längenabschnitt 60-1 sind die ersten geradlinigen Drahtabschnitte 36-1 mit einem ersten Drahtabstand dazwischen vorgesehen; in dem zweiten Längenabschnitt 60-2 sind die zweiten geradlinigen Drahtabschnitte 36-2 mit einem unterschiedlichen zweiten Drahtabstand zueinander vorgesehen; und in dem dritten Längenabschnitt 60-3 sind dritte geradlinige Drahtabschnitte 36-3 mit einem unterschiedlichen dritten Drahtabstand zueinander vorgesehen. Die Wickelköpfe 38 sind bereits bei der Herstellung so geformt, dass die Drahtabschnitte 36-1, 36-2, 36-3 in den unterschiedlichen Längenabschnitten 60-1, 60-2, 60-3 die unterschiedlichen Drahtabstände zueinander haben. Unterschiedliche Drahtabstände können noch in den Übergangsbereichen 30 vorgesehen sein. Je nach Ausführung der Spulenmatte kann - wie aus den Fig. 3 bis 7 hervorgeht - vorgesehen sein, dass eine Einzelmatte mit den drei Längenabschnitten 60-1, 60-2, 60-3 vorgesehen ist, dass - wie in Fig. 4 - unterschiedliche Teilmatten 28-1, 28-2, 28-3 der Spulenmatte 10 die unterschiedlichen Längenabschnitte 60-1, 60-2, 60-3 aufweisen, oder dass unterschiedliche Teilmatten 28-1, 28-2, 28-3 eine oder mehrere oder alle der unterschiedlichen Längenabschnitte 60-1, 60-2, 60-3 mit den entsprechend der einzunehmenden Wicklungslage 26-1, 26-2, 26-3 unterschiedlichen Drahtabständen zwischen den geradlinigen Drahtabschnitten 36-1, 36-2, 36-3 aufweisen.

Zum Übertragen der Spulenmatte 10 kann je nach Ausführung der Spulenwicklung 18 gemäß den Ausführungsbeispielen der Fig. 3 bis 7 eine Einzelmatte als Spulenmatte 10 aufgewickelt sein, um die Konfiguration gemäß Fig. 3 zu bilden. In dem Fügewerkzeug 14 selbst können auch mehrere lineare Teilmatten 28-1, 28-2, 28-3 übereinandergelegt und aufgewickelt sein. Es können auch mehrere einzelne lineare Teilmatten 28-1, 28-2, 28-3 gleichzeitig auf ein Übertragungswerkzeug 12 aufgelegt sein, wobei deren Anfang an der gleichen Stelle (wie zum Bilden der Konfiguration nach Fig. 3) oder auch an unterschiedlichen Stellen liegen kann - beispielsweise zum Bilden spiralförmig eingebrachter Teilmatten 28-1, 28-2, 28-3, 28-4 oder Teilspulen gemäß den Konfigurationen der Fig. 5 bis 7. Fig. 3 zeigt hierbei eine lagenförmig eingebrachte Spulenmatte 10, gebildet aus einer Einzelspule. Fig. 4 zeigt dabei eine lagenförmig eingebrachte Spulenmatte 10, gebildet aus lagenförmig eingebrachten Teilmatten 28-1, 28-2, 28-3. Die Fig. 5 bis 7 zeigen eine mehrlagig eingebrachte Spulenmatte 10, gebildet aus spiralförmig eingebrachten Teilmatten 28-1, 28-2, 28-3, 28-4, wobei in Fig. 5 eine erste und eine zweite Teilmatte 28-1, 28-2 vorgesehen sind, in Fig. 6 eine erste bis dritte Teilmatte 28-1 bis 28-3 vorgesehen sind und in Fig. 7 eine erste bis vierte Teilmatte 28-1 bis 28-4 vorgesehen sind.

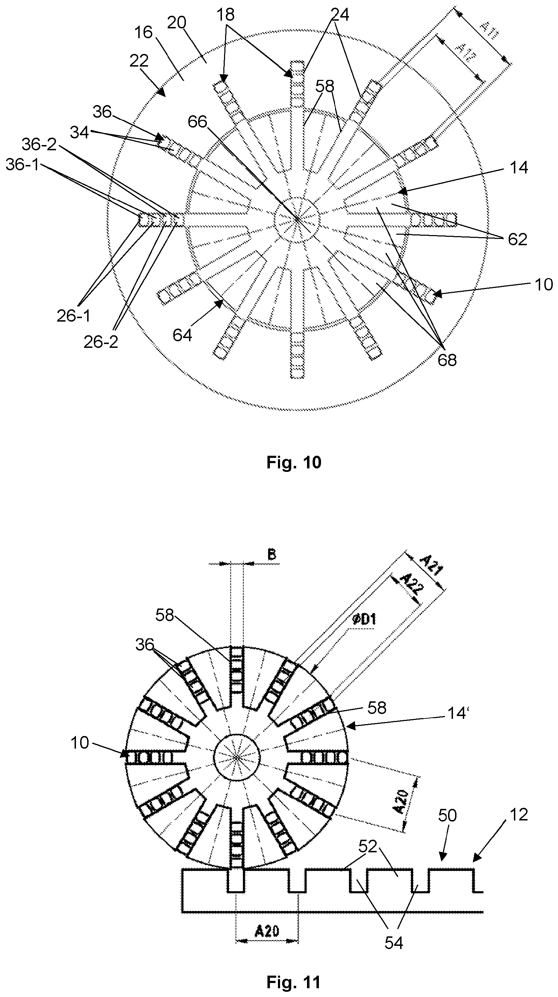

In den Fig. 9 und 10 ist das Fügewerkzeug 14 vor und nach dem Übertragen der Spulenmatte 10 von dem Fügewerkzeug 14 in das Bauteil 16 dargestellt. Hierzu ist das Fügewerkzeug 14 durch die Fügewerkzeugbewegungseinrichtung 56 von dem Übertragungswerkzeug 12 aus axial in das Innere des Bauteils 16 überführt worden. Hierzu wird das Fügewerkzeug 14 in den vorbereiteten Stator 20 eingetaucht, und die Spulenwicklung 18 wird von dem Fügewerkzeug 14 durch eine vorwiegend radiale Bewegung der einzelnen Drahtabschnitte 36-1, 36-2 in den Stator 20 übertragen. Diese Übertragung kann durch nicht dargestellte Greiferelemente oder eine Kurvenführung (ebenfalls nicht dargestellt) erfolgen, wie dies in dem eingangs genannten Stand der Technik beschrieben und gezeigt ist. Bevorzugte Ausgestaltungen der Vorrichtung 40 gemäß der Erfindung nutzen für diesen Schritt Übertragungstechniken, wie sie im Einzelnen in der DE 10 2016 111 478 A1 beschrieben und gezeigt sind, mit den im Folgenden näher erläuterten Modifikationen und Unterschieden.

Die radiale Übertragung kann für alle Drahtabschnitte 36, 36-1, 36-2, 36-3 gleichzeitig oder auch abschnittsweise oder nacheinander erfolgen.

Vorzugsweise hat hierzu das Fügewerkzeug eine der Anzahl der Aufnahmenuten 24 in dem Stator 20 entsprechende Anzahl von Fügewerkzeugnuten 58. So hat das Fügewerkzeug 14 gleich viele Nuten an der gleichen Stelle wie der Stator 20. Um den geradlinigen Drahtabschnitt 36, 36-1, 36-2, 36-3 welcher sich jeweils in der Fügewerkzeugnut 58 befindet, passend in die Aufnahmenut 24 des Stators 20 zu überführen, ist es vorteilhaft, wenn der hier beiliegende geradlinige Drahtabschnitt 36-1, 36-2, 36-3 entsprechend eng von dem Fügewerkzeug 14 geführt wird, um den Draht 34 in die eng tolerierten Aufnahmenuten 24 überführen zu können.

Für das in Fig. 2 gezeigte Aufwickeln der Spulenmatte 10 auf das Fügewerkzeug 14 sollte das Nutspiel in den Fügewerkzeugnuten 58 möglichst groß sein, damit die geradlinigen Drahtabschnitte 36 ohne Verformungen und ohne die Gefahr von Beschädigungen deren Isolierung gut von dem Übertragungswerkzeug 12 auf das Fügewerkzeug 14 übertragen werden können. Für das Überführen der Spulenwicklung 18 von dem Fügewerkzeug 14 in die Aufnahmenuten 24 sollte jedoch das Nutspiel im Fügewerkzeug möglichst klein sein, damit die geradlinigen Drahtabschnitte 36 genau von dem Fügewerkzeug 14 auf den Stator übertragen werden können.

Außerdem sollten die Abstände der geradlinigen Drahtabschnitte 36-1, 36-2, 36-3 untereinander möglichst bereits passend so definiert sein, dass sie weitgehend den Umfangsabständen entsprechen, die sie im eingebauten Zustand in dem Stator 20 einnehmen. Hierdurch ergeben sich in den unterschiedlichen Längenabschnitten 60-1, 60-2, 60-3 unterschiedliche Drahtabstände zwischen den geradlinigen Drahtabschnitten 36-1, 36-2, 36-3, was das Aufnehmen der Spulenmatte 10 von dem Übertragungswerkzeug 12 auf das Fügewerkzeug 14 und das Übertragen von dem Fügewerkzeug 14 in den Stator 20 weiter verkompliziert.

Bisher bekannte Übertragungsverfahren zum Übertragen einer Spulenmatte 10 auf ein beispielsweise als Fügedorn ausgebildetes Fügewerkzeug 14 setzen eine Spulenmatte mit gleichbleibendem Abstand zwischen geradlinigen Drahtabschnitten über die gesamte Länge voraus, um die Drähte beschädigungsfrei von dem Übertragungswerkzeug 12 aufnehmen zu können. In dem Fügewerkzeug nimmt bei bisher bekannten Übertragungsverfahren die Spulenmatte 10 jedoch je nach Lage und insbesondere bei mehreren Umläufen andere Drahtabstände ein. Die Spulenmatte 10 muss hierzu in dem Fügewerkzeug 14 umgeformt werden, was Umformen der Wickelköpfe und somit Änderung der Wickelkopfhöhe und das Risiko einer Beschädigung der Isolierung der Drähte mit sich bringt.

Im Folgenden werden besondere Merkmale eines Verfahrens und einer Vorrichtung 40 beschrieben, welche eine Spulenmatte 10 mit im Vorfeld unterschiedlich erzeugten Drahtabschnitten in das Fügewerkzeug 14 überführt, ohne dabei den Abstand zwischen den unterschiedlichen Drahtabschnitten 36-1, 36-2, 36-3 zu verändern, so dass auf das Umformen des Wickelkopfes 38 beim Überführen oder Positionieren der Spulenmatte 10 in die unterschiedlichen Lagen in dem Fügewerkzeug 14 verzichtet wird. Es wird ein drahtschonenderes Übertragungsverfahren mit der zusätzlichen Möglichkeit erreicht, im gefügten Zustand eine gleichmäßige Wickelkopfhöhe über alle Wicklungslagen 26-1, 26-2, 26-3 hinweg zu erreichen.

Hierzu wird die Spulenmatte 10 bereits im Vorfeld mit Drahtabständen produziert, wie sie später auch in dem Stator 20 vorzufinden sind. Entsprechend wird eine derartige Spulenmatte 10 bereitgestellt. Es wird bei dem Verfahren und bei der Vorrichtung 40 nicht der Drahtabstand der Spulenmatte 10 auf das Fügewerkzeug 14 angepasst, sondern das Fügewerkzeug 14 wird dem jeweiligen Drahtabstand in den unterschiedlichen Längenabschnitten 60-1, 60-2, 60-3 angepasst.

Mit Ausgestaltungen des erfindungsgemäßen Verfahrens ist es möglich, eine lineare Spulenmatte 10 mit mehreren Umläufen auf ein als Fügedorn ausgebildetes Fügewerkzeug 14 zu übertragen, ohne während dieses Übertragens den Drahtabstand ändern zu müssen. Dadurch ist keine Kopfumformung und somit auch keine Krafteinleitung in den Draht 34 während der Gleitbewegung des Drahtes 34 in den Fügewerkzeugnuten 58 erforderlich. Dadurch ist die Gefahr der Beschädigung der Isolation minimiert.

Bei Ausführungsformen des Verfahrens ist vorgesehen, dass sich nicht eine mehrlagige Spulenmatte 10 während des Aufwickelns der Lagen auf die entsprechende radiale Wickellage innerhalb des Fügewerkzeuges 14 anpasst, sondern dass sich das Fügewerkzeug 14 auf die Spulenmatte 10 anpasst. Dabei wird die Spulenmatte 10 bereits im Vorfeld mit den vorteilhaft vorgesehenen unterschiedlichen Drahtabständen pro spätere Wicklungslage 26-1, 26-2, 26-3 hergestellt.

Bei Ausgestaltungen des Verfahrens und der Vorrichtung 40 ist die Übertragung ohne Drahtabstandsänderung auf das Fügewerkzeug 14 dadurch möglich, dass sich das Fügewerkzeug 14 innerhalb der Übertragung der Spulenmatte 10 in den Abstand der Fügewerkzeugnuten 58 durch Verstellung auf den jeweils passenden Drahtabstand anpasst. Bei einer Ausgestaltung ist das lineare Übertragungswerkzeug 12 vorgesehen, dessen Kammstruktur 50 ebenfalls an die unterschiedlichen Drahtabstände in den unterschiedlichen Längenabschnitten 60-1, 60-2, 60-3 angepasst ist.

Bei Verwendung des linearen Übertragungswerkzeuges 12 ist gemäß Ausgestaltungen des Verfahrens und der Vorrichtung 40 vorgesehen, dass zusätzlich das Abstandsmaß zwischen Fügewerkzeug 14 und linearem Übertragungswerkzeug 12 korrigiert wird. Die Drahtabstände in den unterschiedlichen Längenabschnitten 60-1, 60-2, 60-3 können bei der noch linear ausgelegten Spulenmatte 10, beispielsweise aufgenommen in dem Übertragungswerkzeug 12, identisch zu den späteren Drahtabständen in dem Stator 20 entsprechen, sie müssen aber nicht zwingend dem späteren Drahtabstand im Stator 20 entsprechen. Beispielsweise können die Drahtabstände im linearen Zustand auch auf eine andere radiale Position in dem Fügewerkzeug 14 abgestimmt sein.

Vorteile von Ausgestaltungen des Verfahrens und der Vorrichtung 40 sind eine Verringerung der Gefahr der Isolationsbeschädigung der Drähte 34 während des Aufwickelns auf das Fügewerkzeug 14, ein gleichmäßigerer Wickelkopf 38 in dem Stator 20 aufgrund der bereits passenden unterschiedlichen Drahtabstände in der linearen Spulenmatte 20 und im Idealfall auch ein möglicher Verzicht auf das geradlinige Übertragungswerkzeug 12.

Fig. 11 zeigt eine Situation, die sich ergeben würde, wenn man ein starres Fügewerkzeug 14' verwenden würde. Der Draht 34 muss dann in eine sehr enge Fügewerkzeugnut 58 mit Nutbreite B eingeführt werden. Die Spulenmatte 10 hat beim Übertragen durchgängig über die gesamte Länge den Drahtabstand A20, welcher später in dem Fügewerkzeug 44, bei entsprechendem Überführen der früher aufgewickelten Lagen auf eine Position radial mehr zum Zentrum hin, in dem Fügewerkzeug durch zusätzliches Umformen auf A21 bzw. A22 geändert werden muss.

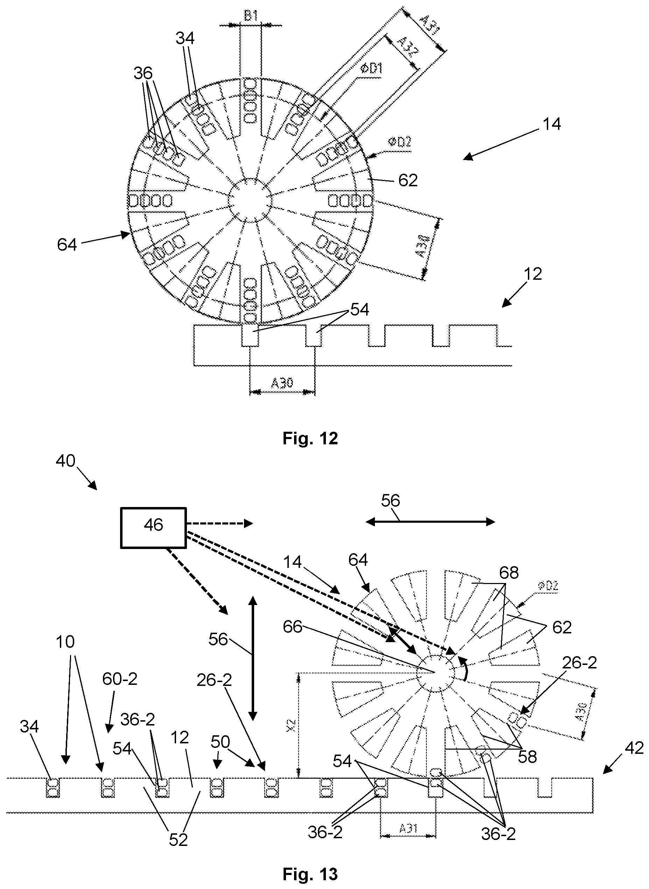

In Fig. 12 ist dagegen ein Fügewerkzeug 14 mit Greifelementen 68 in Form von Segmenten 62 dargestellt, die in dem Fügewerkzeug 14 in radialer Richtung verstellbar sind. Durch Verstellung der Segmente 62 in radialer Richtung lässt sich die Nutbreite der Fügewerkzeugnuten 58 verstellen. In Fig. 13 ist das Fügewerkzeug 14 leicht aufgefahren, um die Nutbreite von B auf B1 zu erhöhen. Betrachtet man die Funktion des radial verstellbaren Fügewerkzeugs 14 in Fig. 11 genauer, ist erkennbar, dass sich hier nicht nur die Nutbreite der Fügewerkzeugnuten 58 ändert, sondern abhängig dazu sich auch der Außendurchmesser an einem die Fügewerkzeugnuten 58 aufweisenden Außenumfangsbereiche 64 des Fügewerkzeugs 14 ändert. Des Weiteren wird die aufgewickelte Spulenmatte 10 nicht mehr auf den Durchmesser aus Fig. 11 komprimiert, sondern nur soweit wie erforderlich, in dem dargestellten Beispiel auf den Drahtabstand A31 und A32.

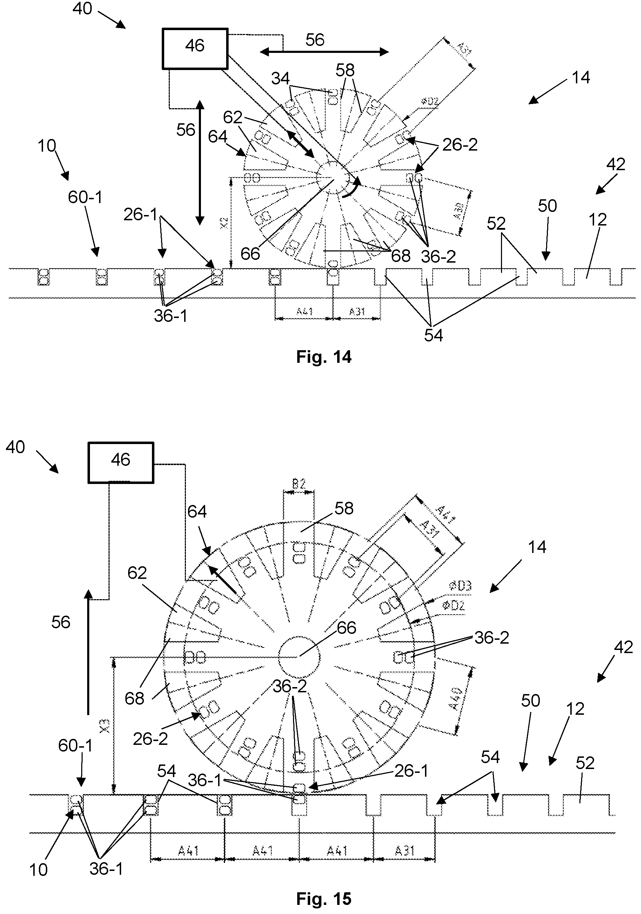

In Fig. 13 und Fig. 14 ist der Start und das Ende des Übertragungsvorgangs derjenigen Wicklungslage zu erkennen, die später im Bauteil 16 radial innen liegt, hier z.B. die zweite Wicklungslage 26-2. Dabei ist zu erkennen, dass die Spulenmatte 10 in dem Fügewerkzeug 14 mit dem Drahtabstand A31 positioniert wird, wobei das Fügewerkzeug 14 an dem Außenumfangsbereich 64 jedoch geometrisch bedingt den Nutabstand A30 besitzt. Bei sehr engem Nutspiel könnte dies zu Problemen führen, allerdings ist durch das Auffahren des Fügewerkzeugs 14 die Nutbreite B1 entsprechend groß ausgeführt, dass auch ein Längsabschnitt 60-2 der Spulenmatte 10 mit etwas kleinerem Drahtabstand A31 ohne Beschädigung aufgenommen werden kann. In Fig. 14 ist die zweite Wicklungslage 26-2 aufgenommen, und die Aufnahme der nächsten resultierenden Wicklungslage - hier z.B. die erste Wicklungslage 26-1 - in das Fügewerkzeug 14 startet.

Bisher blieb hierbei - wie in Fig. 11 angedeutet - das Fügewerkzeug 14' unverändert, die erste Wicklungslage 26-1 würde mit gleichbleibendem Drahtabstand aufgenommen (A41 wäre identisch zu A31), und die zweite Wicklungslage 26-2 müsste in das Fügewerkzeug 14 radial nach innen gedrückt werden. Ein Überführen einer Spulenmatte 10 mit unterschiedlichen Längenabschnitten 60-1, 60-2, die jeweils unterschiedliche Drahtabstände von vorne herein aufweisen, wäre bei starrem Fügewerkzeug 14' aufgrund des nun stark abweichenden Maßes A30 und A41 und somit durch das nicht mehr Übereinanderliegen der Fügewerkzeugnuten 58 auf den Übertragungswerkzeugnuten 54 beim weiteren Abrollen nicht direkt möglich. Ein Übertragen wäre theoretisch möglich, wenn die Umfangsgeschwindigkeit am Außenumfangbereich 64 des Fügewerkzeugs 14' nun bewusst größer gewählt würde als die Lineargeschwindigkeit des linearen Übertragungswerkzeuges 12, so dass bewusst ein Schlupf erzeugt wird. Dies würde funktionieren, solange der Draht 34 in eine Fügewerkzeugnut 58 vollständig übertragen ist, bevor der nächste Draht 34 in die Fügewerkzeugnut 58 überführt wird. In der Praxis ist jedoch der notwendige Bewegungswinkel zum Übertragen größer als der vorhandene Winkel zwischen zwei Fügewerkzeugnuten 58; somit werden üblicherweise Drähte 34 mehrerer Übertragungswerkzeugnuten 54 gleichzeitig übertragen. Dadurch ist das Prinzip mit Schlupf in der Praxis kaum umsetzbar bzw. führt zu Drahtbeschädigungen.

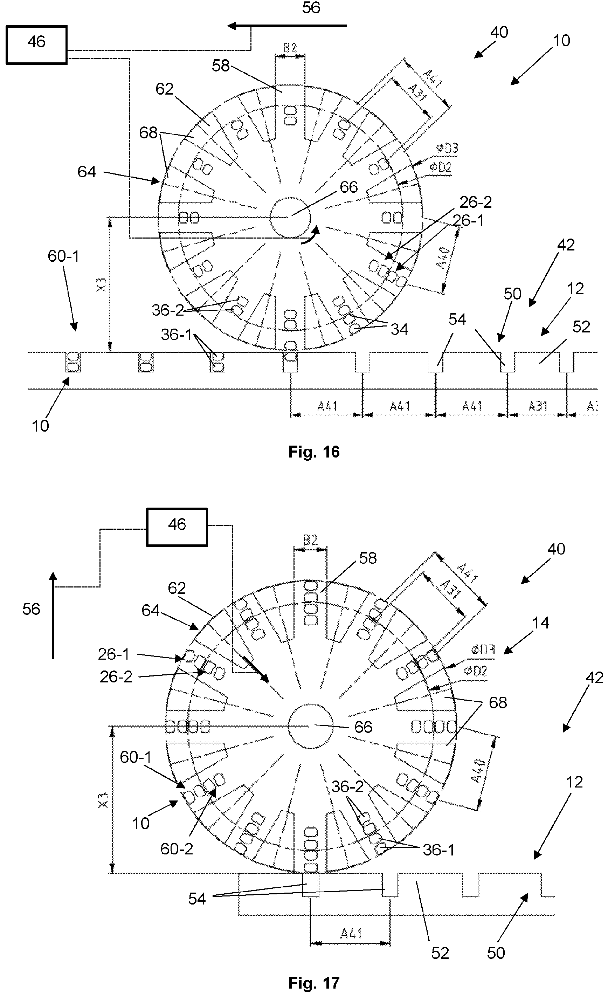

Bei der in den Fig. 13 bis 17 am Beispiel einer Spulenwicklung 18 mit zwei Wicklungslagen 26-1, 26-2 gezeigten Ausführungsform der Vorrichtung 40 gemäß der Erfindung wird nun durch die Steuerung 46 während des Übertragungsprozesses oder innerhalb eines Übertragens einer Spulenmatte 10 der Außenumfangbereich 64 des Fügewerkzeuges 12 in seinem Durchmesser geändert, wodurch sich durch die nicht naheliegende geometrische Änderung der Abrollumfang bei gleichbleibender Anzahl von Fügewerkzeugnuten 58 und somit der Abstand der Fügewerkzeugnuten 58 am Außenumfangbereich 64 ändert.

Bei einer Ausgestaltung der Vorrichtung 40 gemäß der Erfindung wird nun der Abstand der Fügewerkzeugnuten 58 am Außendurchmesser auf A40 geändert, wie dies in Fig. 15 dargestellt ist. Gleichzeitig wird auch das Abstandsmaß der Drehachse 66 des Fügewerkzeugs 14 zu dem linearen Übertragungswerkzeug 12 auf das Maß X3 korrigiert, um weiterhin ein sauberes Abrollen auf dem Übertragungswerkzeug 12 zu erreichen. Durch das Auffahren des Fügewerkzeugs 14 wird nun Platz für die neue erste Wicklungslage 26-1 geschaffen. Die bereits aufgewickelte zweite Wicklungslage 26-2 verbleibt in ihrer Position mit dem Drahtabstand A31. Dass beim Auffahren des Fügewerkzeugs 14 auch die Nutbreite B1, auf welche ursprünglich das radial verstellbare Fügewerkzeug 14 eingestellt worden ist, auf die Nutbreite B2 verändert wird, stellt sich als vorteilhaft dar.

In den Fig. 15 bis 17 ist der weitere Prozess der Übertragung der ersten Wicklungslage 26-1 der Spulenmatte 10 dargestellt. Das Fügewerkzeug 14 ist an seinem Außenumfangsbereich 64 auf den Nutabstand A40 aufgefahren. Die zweite Wicklungslage 26-2 verbleibt mit dem Drahtabstand A31 in dem Fügewerkzeug 14. Die erste Wicklungslage 26-1 nimmt in dem Fügewerkzeug 14 den Drahtabstand A41 ein; dafür wurde bereits die Spulenmatte 10 im Vorfeld auf diesen Drahtabstand A41 hergestellt. Hier gilt wiederum, dass der geometrisch bedingte neue, am Außenumfangsbereich 64 des Fügewerkzeugs 14 vorhandene Nutabstand A40 aufgrund des großen Nutspiels nicht zwingend exakt mit dem Drahtabstand A41 übereinstimmen muss.

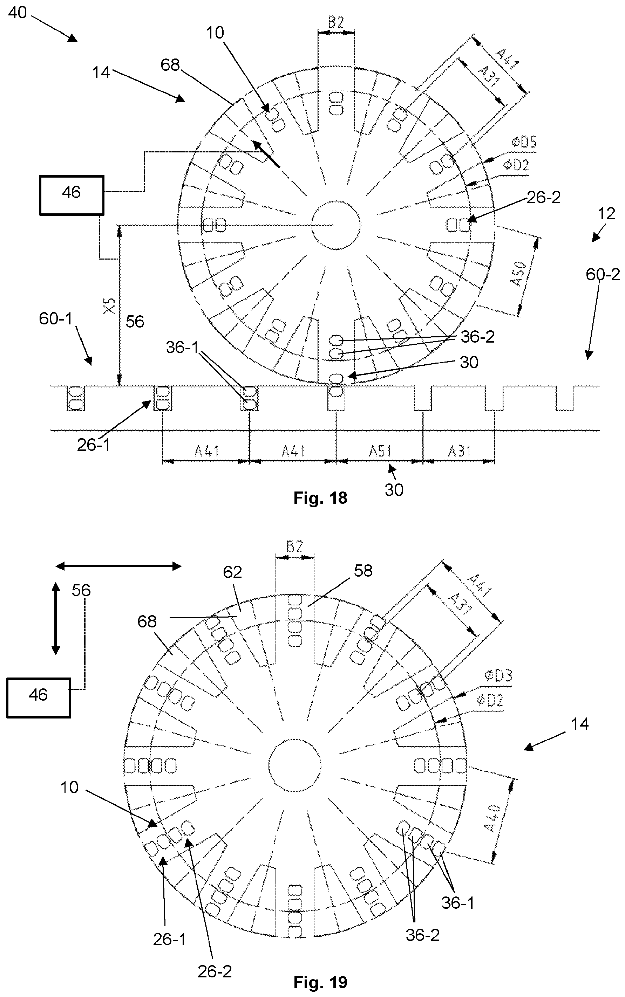

Die Fig. 18 zeigt eine Variante des Verfahrens und der Vorrichtung 40. Besonders bei dem Übergang zwischen zwei Wicklungslagen 26-1, 26-2 (im Übergangsbereich 30) ist ein großes Nutspiel von Vorteil. Bei einem Sprung von einer Wicklungslage 26-1 in eine andere Wicklungslage 26-2 kann ein Übergangs-Drahtabstand A51 vorteilhaft sein, welcher vorzugsweise ungefähr das Mittelmaß zwischen dem Drahtabstand A31 der einen Wicklungslage 26-1 und dem Drahtabstand A41 der anderen Wicklungslage 26-2 ist. Je nach Geometrie der Spulenmatte 10 ist es auch vorteilhaft, die Spulenmatte 10 mit einem Übergangsdrahtabstand auszuführen, wie dies in Fig. 18 mit dem Drahtabstand A51 angedeutet ist. Hier wurde zwischen dem Drahtabstand A31 und dem weiteren Drahtabstand A41 für den Übergang ein Übergangs-Drahtabstand A51 vorgesehen. Vorteilhafterweise wird nun auch das Fügewerkzeug 14 in dem Übergangsbereich 30 mit dem entsprechenden Durchmesser und dem Nutabstand A50 am Außenumfangsbereich 64 eingestellt.

Wie weiter in Fig. 18 zu sehen, wird vorteilhafterweise bei jeder Korrektur des Nutabstands am Außenumfangsbereich 64 des Fügewerkzeugs 14 und somit der Änderung des Außendurchmessers des Außenumfangsbereichs 64 des Fügewerkzeugs 14 das Abstandsmaß zwischen der Drehachse 66 und dem Übertragungswerkzeug 12 korrigiert. Z.B. ist in Fig. 18 entsprechend der Einstellung auf den Drahtabstand A51 und dem Nutabstand A50 das Abstandsmaß in X5 korrigiert, um ein Abrollen mit möglichst kleinem Spiel zwischen dem Fügewerkzeug 14 und dem Übertragungswerkzeug 12 zu erreichen.

Bei einer Vorgehensweise ist immer ein Verstellen des Fügewerkzeuges 14 bei einem Wechsel zwischen zwei unterschiedlichen Drahtabständen während des Aufwickelns vorgesehen. Dies kann durch Stoppen der relativen linearen Bewegung zwischen Übertragungswerkzeug 12 und Fügewerkzeug 14 und Anpassen des Fügewerkzeugs 14 erfolgen, oder auch durch eine kontinuierliche Anpassung des Fügewerkzeugs 14 während der relativen linearen Bewegung.

Auch der Zeitpunkt von Start und Ende der Verstellung ist bei einer Vorgehensweise abhängig von der Spulengeometrie. Es muss nicht zwingend eine lineare Bewegung zwischen einem Lagenwechsel sein, es kann auch ein anderer Bewegungsablauf sein.

In Fig. 19 ist nun eine auf das Fügewerkzeug 14 aufgewickelte Spulenmatte 10 nach dem neuen Übertragungsprinzip dargestellt. Eine Besonderheit dabei ist, dass sich die Drahtabstände der Längenabschnitte 60-1, 60-2 der Spulenmatte 10 während der Übertragung nicht oder nur unwesentlich geändert haben. Durch die Abhängigkeit zwischen Nutabstand des Fügewerkzeuges 14 und der Breite der Fügewerkzeugnuten 58 ergibt sich bei diesem Verfahren verglichen mit den bisher bekannten Übertragungsverfahren ein relativ großes Spiel des Drahtes 34 in der Fügewerkzeugnut 58, welches auf den ersten Blick unerwünscht wäre und zu Problemen führen könnte. Jedoch sind die einzelnen geradlinigen Drahtabschnitte 36-1, 36-2 jeweils durch Wickelköpfe 38 verbunden. Aufgrund der Wickelköpfe 38 können die Drähte 34 nicht aneinander vorbei rutschen und die Positionen oder Reihenfolge in der Fügewerkzeugnut 58 verändern.

Nach dem erfolgten Aufwickeln, wie es in Fig. 19 zu sehen ist, wird anschließend das Fügewerkzeug 14 gemeinsam mit der Spulenwicklung 18 auf einen kleinen Außendurchmesser D1 eingefahren. Die Segmente 62 sind vorteilhafterweise als segmentartige, radial verstellbare Greifelemente 68 ausgebildet, die die Drähte 34 erfassen und festhalten.

Durch das gemeinsame Einfahren der Greifelemente 68 ist zwischen Draht 34 und den Seitenflächen der Fügewerkzeugnuten 58 keine Relativbewegung vorhanden. Um die Spulenwicklung 18 von innen in die Aufnahmenuten 24 einfügen zu können, muss prozessbedingt bei dem Fügeverfahren der Drahtabstand der einzelnen Längenabschnitte 60-1, 60-2 (der einzelnen Wicklungslagen 26-1, 26-2) temporär verkleinert werden. Dabei werden temporär auch die Wickelköpfe 38 verformt. Bei diesem beschriebenen Umformprozess der Wickelköpfe 28 ist zwar wieder eine Krafteinleitung über die geradlinigen Drahtabschnitte 36-1, 36-2 vorhanden, jedoch ist während dieser Krafteinleitung keine Relativbewegung vorhanden, d.h. die Drahtabschnitte 36-1, 36-2 verbleiben in ihrer radialen Lage relativ zu den Greifelementen 68 - somit ist dieser Prozess wesentlich schonender für die Drahtisolation als die bisher bekannten Prozesse des Umformens während des Aufwickelns.

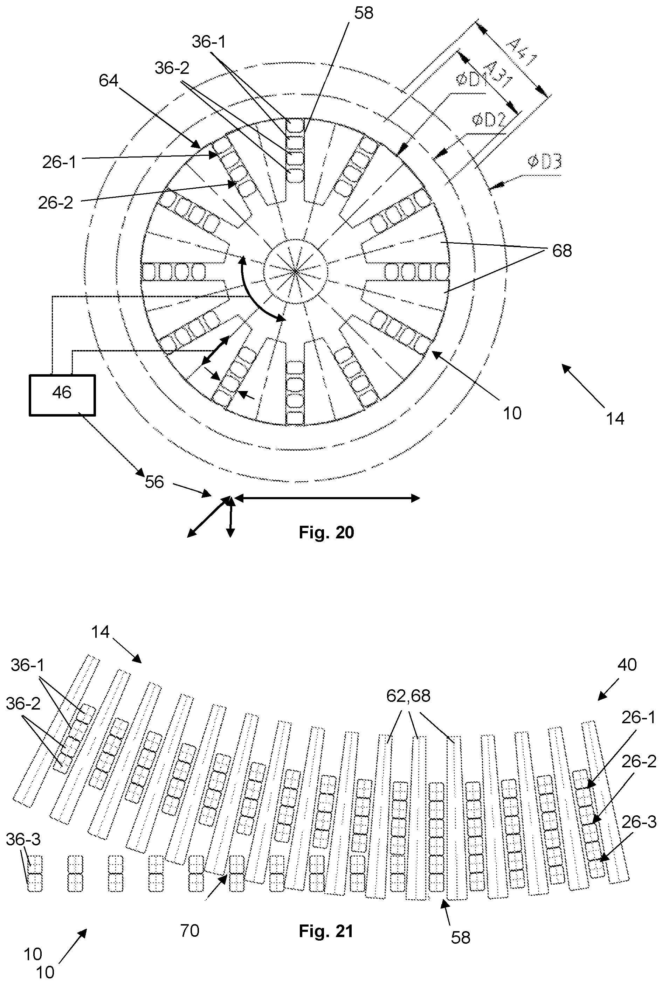

In Fig. 20 ist nun der auf den kleinen Durchmesser D1 eingefahrene Fügedorn - Fügewerkzeug 14 - mit komprimierter Spulenwicklung 18 mit reduziertem Drahtabstand ersichtlich. Das vorher kritische Nutspiel durch die große Nutöffnung B2 wurde durch die Durchmesserreduzierung des Außenumfangsbereichs 64 des Fügewerkzeugs 14 und dadurch geometrisch bedingte Reduzierung der Nutbreite für den Fügevorgang auf ein Minimum reduziert. Mit dem kleinen Durchmesser D1 kann das Fügewerkzeug 14 dann erfindungsgemäss in das Gehäuse 22 eintauchen, um dann die Drahtabschnitte 36-1, 36-2 in die Aufnahmenuten 24 zu überführen.

Bei einer besonders bevorzugten Ausgestaltung des Verfahrens und der Vorrichtung 40 wird beim Übergang des Zustands von Fig. 19 auf den Zustand von Fig. 20 noch ein weiterer Verfahrensschritt durchgeführt. Hierbei wird das Fügewerkzeug 14 an seinem Außenumfangsbereich 64 bewusst weiter eingefahren, als es zum Fügen erforderlich wäre. D.h. der Außendurchmesser D1 ist bewusst wesentlich kleiner als der Innendurchmesser des Bauteils 16. Diese wesentlich kleinere Verkleinerung dient nicht zum Ausgleich von Toleranzen zwischen dem Fügewerkzeug 14 und dem Gehäuse 22 des Bauteils 16 (z.B. Blechpaket des Stators 20), sondern es kann dadurch gezielt ein Übermaß von Nutbreite und Draht erzeugt werden. Beispielsweise ist die Nutbreite der Fügewerkzeugnuten 58 kleiner als die Breite der geradlinigen Drahtabschnitte 36-1, 36-2. So kann durch Reibschluss ein Herausspringen von Drähten 34 verhindert werden. Es kann somit auf eine weitere Fixierung der Spulenwicklung 18 für den Prozess des Einführens des Fügewerkzeugs 14 in das Bauteil 16 (z.B. Eintauchen des Fügewerkzeugs 14 in das Gehäuse 22 des Stators 20) verzichtet werden.
Bei einer alternativen Ausgestaltung des Verfahrens und der Vorrichtung 40 ist es auch möglich, die Fügewerkzeugnuten 58 jeweils am Nutausgang bewusst zu verkleinern, um den Draht 34 zusätzlich durch einen kleinen Formschluss in dem Fügewerkzeug 14 zu fixieren. Hierzu sind beispielsweise Vorsprünge (nicht dargestellt) am Nutausgang der Fügewerkzeugnuten 58 vorgesehen. Es kann auch jeweils ein Hinterschnitt bzw. eine Nutverengung am Nutausgang vorgesehen sein.

Durch diese Ausbildung können weitere Halteelemente, die zuvor beim Überführen des Fügewerkzeugs 14 in das Bauteil 16 zum Festhalten der Spulenmatte 10 notwendig waren, weggelassen werden. Dadurch lassen sich die Vorrichtung 40 und das Verfahren wesentlich vereinfachen. Das Festhalten der Spulenmatte 10 erfolgt einfach durch ein stärkeres Einfahren der Greifelemente 68.

Zum Ausgleich der Toleranzen der Durchmesser des Bauteils 16 und des Fügewerkzeugs 14 wäre normalerweise ein radialer Verstellbereich von ca. 0,1% des Durchmessers ausreichend, z.B. 0,2 mm bei Durchmesser 200 mm. Es wäre somit ausreichend, den Durchmesser des Außenumfangbereichs 64 des Fügewerkzeuges 14 um 0,1% kleiner als der Innendurchmesser des Bauteils 16 einzustellen. Bei einer besonders bevorzugten Vorgehensweise wird jedoch zum Klemmen des Drahtes 34 in dem komprimierten Zustand des Fügewerkzeugs 14 eine Durchmesserverkleinerung von mehr als 1% durchgeführt. Somit wird der Außenumfangbereich 64 des Fügewerkzeugs 14 wesentlich mehr verkleinert als dies für die üblichen Toleranzen notwendig wäre. Es wird somit ein größerer Verstellbereich vorgesehen.

Das Verstellen erfolgt vorzugsweise nach dem Aufwickeln der Spulenmatte 10 auf das Fügewerkzeug 14 und somit dann, wenn keine radiale Bewegung von geradlinigen Drahtabschnitten 36 in den Fügewerkzeugnuten 58 stattfindet. Somit ist das Verstellen hinsichtlich der Drahtisolierung unkritisch.

Das Einfügen des Fügewerkzeugs 14 in das Bauteil 16 erfolgt dann so, wie dies in Fig. 9 gezeigt ist. Hier wird der Außenumfangsbereich 64 des Fügewerkzeugs 14 auf größer als 1% aufgefahren. Zum Ausgleich von Toleranzen, Reduzierung des Spaltes am Übergang zum Stator 20 wäre ein kleinerer Verstellbereich ausreichend. Bei bevorzugten Ausgestaltungen des Verfahrens und der Vorrichtung 40 wird das Auffahren jedoch bewusst größer gewählt, um eine durch Reibschluss oder Formschluss gehaltene Spulenwicklung 18 für das Einfügen wieder freizugeben. Zusätzlich ist durch diese Bewegung gegebenenfalls ein Halten von Nutisolationspapier (nicht dargestellt) möglich. Jede Aufnahmenut 24 kann mit einem Nutisolationspapier versehen sein. Werden nun die Greifelemente 68 in radialer Richtung aufgefahren und gegen die Innenseite des Gehäuses 22 gedrückt, können so die Nutisolationspapiere festgehalten werden. Das radiale Überführen erfolgt dann analog, wie in Fig. 10 wiedergegeben und oben beschrieben.
In Fig. 21 ist noch eine weitere Ausführungsform für das Verfahren und die Vorrichtung 40 zum Übertragen einer linearen Spulenmatte 10 in ein rotatorisches Fügewerkzeug 14 dargestellt, ohne während dieses Übertragens den Drahtabstand in der Spulenmatte 10 zu verändern. Hierbei wird wiederum im Vorfeld die Spulenmatte 10, wie bereits erläutert, mit den unterschiedlichen Drahtabständen in den unterschiedlichen Längenabschnitten 60-1, 60-2 hergestellt. Das Bereitstellen der Spulenmatte 10 kann hier ohne lineares Übertragungswerkzeug 12 erfolgen. Während der Übertragung wird wiederum das zuvor beschriebene Verfahren verwendet, wobei innerhalb einer Spulenmatte 10 der Durchmesser des Außenumfangbereichs 64 des Fügewerkzeuges 14 und somit der Nutabstand zwischen Fügewerkzeugnuten 58 auf die jeweilige Spulengeometrie angepasst wird. Es wird hier das Fügewerkzeug 14 und die Spulenwicklung 18 für einen Stator 20 mit sehr vielen Nuten dargestellt. Grundsätzlich ist dieses Verfahren jedoch auch für Statoren 20 mit einer geringeren Anzahl von Nuten - wie in den vorherigen Beispielen - anwendbar.

Bei dem Verfahren und der Vorrichtung 40 gemäß der Ausführungsform von Fig. 21 wird auf das lineare Übertragungswerkzeug 12 komplett verzichtet. Bei entsprechender Geometrie der Spulenmatte 10 und entsprechend großem Nutspiel des Fügewerkzeugs 14 kann die Spulenwicklung 18 mit ihren unterschiedlichen Wicklungslagen 26-1, 26-2, 26-3 direkt auf das Fügewerkzeug 14 aufgewickelt werden. Durch Auffahren des Fügewerkzeugs 14 wird - wie bereits zuvor anhand der anderen Ausgestaltungen erläutert - der Abstand zwischen Fügewerkzeugnuten 58 des Fügewerkzeugs 14 auf den jeweils sich während des Aufwickelns ändernden Nutabstand eingestellt. Hierdurch kann eine Spulenmatte 10 Lage für Lage aufgewickelt werden. Hierbei wird die Spulenmatte 10 im Drahtabstand nicht verändert. Zum Einbringen der hier paarweise vorgesehenen geradlinigen Drahtabschnitte 36-1, 36-2, 36-3 in die Fügewerkzeugnuten 58 werden diese auf eine genügend große Breite eingestellt. Durch die genügend große Breite der Fügewerkzeugnuten 58 entsteht genügend Platz für ein schiefes Einfädeln. Das Spiel zwischen den Greifelementen 68 und den einzelnen Drähten 34 bei ausgefahrenem Fügewerkzeug 14 ermöglicht ein schiefes Eindringen der einzelnen Lagen der Spulenmatte 10.

Ansonsten wird das Verfahren wie zuvor anhand der anderen Ausführungsbeispiele erörtert durchgeführt.

### Bezugszeichenliste:

- 10: Spulenmatte
- 12: Übertragungswerkzeug
- 14: Fügewerkzeug
- 14': starres Fügewerkzeug
- 16: Bauteil
- 18: Spulenwicklung
- 20: Stator
- 22: Gehäuse
- 24: Aufnahmenut
- 26-1: erste Wicklungslage
- 26-2: zweite Wicklungslage
- 26-3: dritte Wicklungslage
- 28-1: erste Teilmatte
- 28-2: zweite Teilmatte
- 28-3: dritte Teilmatte
- 28-4: vierte Teilmatte
- 30: Übergangsbereich
- 32: Lagensprung
- 34: Draht
- 36: geradliniger Drahtabschnitt
- 36-1: erster geradliniger Drahtabschnitt
- 36-2: zweiter geradliniger Drahtabschnitt
- 36-3: dritter geradliniger Drahtabschnitt
- 38: Wickelkopf
- 40: Vorrichtung
- 42: Spulenmattenbereitstelleinrichtung
- 46: Steuerung
- 50: Kammstruktur
- 52: Zinken
- 54: Übertragungswerkzeugnut
- 56: Fügewerkzeugbewegungseinrichtung
- 58: Fügewerkzeugnut
- 60-1: erster Längenabschnitt
- 60-2: zweiter Längenabschnitt
- 60-3: dritter Längenabschnitt
- 62: Segment
- 64: Außenumfangbereich
- 66: Drehachse
- 68: Greifelement
- 70: schiefes Einfädeln

## Patentansprüche

1. Verfahren zum mehrlagigen Einfügen einer Spulenmatte (10) in nach innen offene Aufnahmenuten (24) eines zumindest bereichsweise ringförmigen Bauteils (16) einer elektrischen Maschine, umfassend:
a) Bereitstellen einer Spulenmatte (10), die geradlinige Drahtabschnitte (36, 36-1, 36-2, 36-3) und Wickelköpfe (38), die geradlinige Drahtabschnitte (36, 36-1, 36-2, 36-3) verbinden, derart aufweist, dass ein zum Bilden einer ersten Lage (26-1) der Spulenmatte (10) in dem Bauteil (16) bestimmter erster Längenabschnitt (60-1) der Spulenmatte (10) erste geradlinige Drahtabschnitte (36-1) aufweist, die mit einem ersten Drahtabstand beabstandet sind, und ein zum Bilden einer zweiten Lage (26-2) der Spulenmatte (10) in dem Bauteil (16) bestimmter zweiter Längenabschnitt (60-2) der Spulenmatte (10) zweite geradlinige Drahtabschnitte (36-2) aufweist, die mit einem unterschiedlichen zweiten Drahtabstand beabstandet sind,
b) Aufrollen des ersten Längenabschnitts (60-1) der Spulenmatte (10) auf ein Fügewerkzeug (14), das an einem Außenumfangsbereich (64) mit in der Lage einstellbaren Greifelementen (68) versehen ist, zwischen denen nach außen hin offene Fügewerkzeugnuten (58) gebildet sind, wobei die ersten geradlinigen Drahtabschnitte (36-1) in die Fügewerkzeugnuten (58) eingeführt werden,
c) Verändern des Nutabstandes der Fügewerkzeugnuten (58) zur Anpassung an den zweiten Drahtabstand,
d) Aufrollen des zweiten Längenabschnitts (60-2) der Spulenmatte (10) unter Einfügen der zweiten geradlinigen Drahtabschnitte (36-2) in die Fügewerkzeugnuten (58), und anschließendes Einfahren des Fügewerkzeugs (14) auf einen kleineren Außendurchmesser (D1), mit dem das Fügewerkzeug (14) in das Bauteil (16) eintauchen kann;
f) Einfügen des Fügewerkzeugs (14) in das Bauteil (16) und Ausrichten der Fügewerkzeugnuten (58) zu den Aufnahmenuten (24),
g) Überführen der geradlinigen Drahtabschnitte (36, 36-1, 36-2, 36-3) aus den Fügewerkzeugnuten (58) in die Aufnahmenuten (24).

2. Verfahren nach Anspruch 1,
**gekennzeichnet durch**
2.1 Verwenden eines Fügewerkzeugs (14) mit segmentartigen Greifelementen (68), die radial verschiebbar sind, und
radiales Verstellen der Greifelemente (68), um die Nutbreite, den Außenumfang und den Nutabstand zu verändern und/oder
2.2 Verändern des Durchmessers des Fügewerkzeugs (14) an dem Außenumfangbereich (64), um den Nutabstand zu verändern und/oder
2.3 Anpassen eines Abstands einer Drehachse (66) des Fügewerkzeugs (14) zu einem noch aufzurollenden Abschnitt der Spulenmatte (10) abhängig von einer Änderung des Durchmessers des Außenumfangbereichs (64).

3. Verfahren nach einem der voranstehenden Ansprüche,
**gekennzeichnet durch**
e1) Fixieren wenigstens eines Bereichs der Spulenmatte (10) in dem Fügewerkzeug (14) durch Verkleinern der Nutbreite wenigstens einiger oder aller der Fügewerkzeugnuten (58), um darin eingefügte Drahtabschnitte (36-1, 36-2, 36-3) festzuhalten und/oder
e2) Lösen der Spulenmatte (10) von dem Fügewerkzeug (14) **durch** Vergrößerung der Nutbreite, um darin festgehaltene Drahtabschnitte (36-1, 36-2, 36-3) zu lösen.

4. Verfahren nach Anspruch 3,
**dadurch gekennzeichnet**,
4.1 dass Schritt e1) wenigstens einen der Schritte enthält:
e1.1) Verkleinern der Nutbreiten zum Festklemmen von Drahtabschnitten (36-1, 36-2, 36-3) zwischen den Greifelementen (68),
e1.2) Verkleinern der Nutbreiten zum formschlüssigen Festhalten von Drahtabschnitten (36-1, 36-2, 36-3) hinter Vorsprüngen an Greifelementen (68) an der Öffnung der Fügewerkzeugnuten (58),
e.1.3) Verkleinern der Nutbreiten durch Durchführen wenigstens einer der Schritte von Anspruch 2 und Verkleinern des Durchmessers des Außenumfangs des Fügewerkzeugs (14) um mehr als 1%,
und/oder
4.2 dass Schritt e2) enthält:
Vergrößern der Nutbreiten durch Durchführen wenigstens einer der Schritte von Anspruch 2 und Vergrößern des Durchmessers des Außenumfangs um mehr als 1%,
und/oder
4.3 dass der Schritt e1) vor und/oder während Schritt f) durchgeführt wird und dass Schritt e2) nach Schritt f) und vor und/oder während Schritt g) durchgeführt wird.

5. Verfahren nach einem der voranstehenden Ansprüche,
**dadurch gekennzeichnet,**
**dass** Schritt a) wenigstens einen oder mehrere der Schritte umfasst:
a1) Bereitstellen der Spulenmatte (10) auf einem sich linear erstreckenden kammartigen Übertragungswerkzeug (12) derart, dass eine oder mehrere Spulenmattenlagen einer Spulenmatte (10) oder mehrerer Teilmatten (28-1, 28-2, 28-3, 28-4) auf einer Kammstruktur (50) mit zwischen Zinken (52) der Kammstruktur (50) positionierten geradlinigen Drahtabschnitten (36, 36-1, 36-2, 36-3) gehalten sind,
a2) Bereitstellen der Spulenmatte (10) derart, dass ein erster geradliniger Drahtabschnitt (36-1) an dem Ende des ersten Längenabschnitts (60-1) und ein zweiter geradliniger Drahtabschnitt (36-2) an dem Anfang des zweiten Längenabschnitts (60-2) mit einem Übergangsdrahtabstand beabstandet sind, dessen Wert zwischen dem ersten Drahtabstand und dem zweiten Drahtabstand liegt,
a3) Bereitstellen der Spulenmatte (10) derart, dass der erste geradlinige Drahtabschnitt (36-1) an dem Ende des ersten Längenabschnitts (60-1) und der zweite geradlinige Drahtabschnitt (36-2) an dem Anfang des zweiten Längenabschnitts (60-2) mit einem Übergangsdrahtabstand beabstandet sind, dessen Wert dem Mittelwert des ersten Drahtabstands und des zweiten Drahtabstands plus/minus 10% entspricht,
a4) Bereitstellen der Spulenmatte (10) derart, dass der erste Drahtabstand dem Drahtabstand der ersten geradlinigen Drahtabschnitte (36-1) bei deren bestimmungsgemäßen Gebrauch in dem Bauteil (16) entspricht und dass der zweite Drahtabstand dem Drahtabstand der zweiten geradlinigen Drahtabschnitte (36-2) bei deren bestimmungsgemäßen Gebrauch in dem Bauteil (16) entspricht.

6. Verfahren nach einem der voranstehenden Ansprüche,
**dadurch gekennzeichnet,**
**dass** Schritt b) wenigstens einen oder mehrere der Schritte umfasst:
b1) Anpassen des Nutabstandes der Fügewerkzeugnuten (58) an den ersten Drahtabstand,
b2) Abrollen des Fügewerkzeuges (14) mit seinem kreisförmigen Außenumfang über die linear ausgelegte oder sich linear bewegende Spulenmatte (10), b3) Abrollen des Fügewerkzeuges (14) mit seinem kreisförmigen Außenumfang über das sich relativ zu dem Fügewerkzeug (14) linear bewegende lineare Übertragungswerkzeug (12) gemäß Schritt a1) von Anspruch 5,
b4) Anpassen des Abstandes des Außenumfangs zu dem linearen Übertragungswerkzeug (12) gemäß Schritt a1) von Anspruch 5 durch Veränderung des Abstandes der Drehachse (66) des Fügewerkzeugs (14) zu dem linearen Übertragungswerkzeug (12), und/oder
b5)
b5.1 radiales Bewegen der ersten Drahtabschnitte (36-1) in die Fügewerkzeugnuten (58) oder
b5.2 Anpassen der Nutbreite auf ein schiefes Einfädeln (70) der ersten Drahtabschnitte (36-1) und Einfügen der ersten Drahtabschnitte (36-1) durch Abrollen
ohne radiales Bewegen der ersten Drahtabschnitte (36-1),
und/oder
**dass** Schritt d) wenigstens einen oder mehrere der Schritte umfasst:
d1) Anpassen des Nutabstandes der Fügewerkzeugnuten (58) an den zweiten Drahtabstand.
d2) Abrollen des Fügewerkzeuges (14) mit seinem kreisförmigen Außenumfang über die linear ausgelegte oder sich linear bewegende Spulenmatte (10), d3) Abrollen des Fügewerkzeuges (14) mit seinem kreisförmigen Außenumfang über das sich relativ zu dem Fügewerkzeug (14) linear bewegende lineare Übertragungswerkzeug (12) gemäß Schritt a1) von Anspruch 5,
d4) Anpassen des Abstandes des Außenumfangs zu dem linearen Übertragungswerkzeug (12) gemäß Schritt a1) von Anspruch 5 durch Veränderung des Abstandes der Drehachse (66) des Fügewerkzeugs (14) zu dem linearen Übertragungswerkzeug (12), und/oder
d5)
d5.1 radiales Bewegen der zweiten Drahtabschnitte (36-2) in die Fügewerkzeugnuten (58) oder
d5.2 Anpassen der Nutbreite auf ein schiefes Einfädeln (70) der zweiten Drahtabschnitte (36-2) und Einfügen der zweiten Drahtabschnitte (36-2) durch Abrollen ohne radiales Bewegen der zweiten Drahtabschnitte (36-2).

7. Verfahren nach einem der voranstehenden Ansprüche,
**dadurch gekennzeichnet,**
**dass** Schritt c) wenigstens einen oder mehrere der Schritte umfasst:
c1) Verändern des Nutabstand zur Anpassung an den Übergangsdrahtabstand gemäß Schritt a2) oder a3) von Anspruch 5 und anschließend Verändern des Nutabstands zur Anpassung an den zweiten Drahtabstand,
c2) Verändern des Nutabstandes während eines Stoppens einer relativen Linearbewegung zwischen Fügewerkzeug (14) und Spulenmatte (10), c3) Verändern des Nutabstandes während einer kontinuierlichen relativen Linearbewegung zwischen Fügewerkzeug (14) und Spulenmatte (10),
c4) Verändern des Nutabstandes abhängig von der Geometrie der Spulenmatte (10).

8. Vorrichtung (40) zum mehrlagigen Einfügen einer Spulenmatte (10) in nach innen offene Aufnahmenuten (24) eines zumindest bereichsweise ringförmigen Bauteils (16) einer elektrischen Maschine umfassend:
ein Spulenmattenbereitstelleinrichtung (42) zum Bereitstellen einer Spulenmatte (10), die geradlinige Drahtabschnitte (36-1, 36-2, 36-3) und Wickelköpfe (38), die geradlinige Drahtabschnitte (36-1, 36-2, 36-3) verbinden, derart aufweist, dass ein zum Bilden einer ersten Lage (26-1) der Spulenmatte (10) in dem Bauteil (16) bestimmter erster Längenabschnitt (60-1) der Spulenmatte (10) erste geradlinige Drahtabschnitte (36-1) aufweist, die mit einem ersten Drahtabstand beabstandet sind, und ein zum Bilden einer zweiten Lage (26-2) der Spulenmatte (10) in dem Bauteil (16) bestimmter zweiter Längenabschnitt (60-2) der Spulenmatte (10) zweite geradlinige Drahtabschnitte (36-2) aufweist, die mit einem unterschiedlichen zweiten Drahtabstand beabstandet sind,
ein um eine Drehachse (66) relativ zu der Spulenmatte (10) und/oder dem Bauteil (16) drehbares Fügewerkzeug (14), das an einem Außenumfangsbereich (64) mit in der Lage einstellbaren Greifelementen (68) versehen ist, zwischen denen nach außen hin offene Fügewerkzeugnuten (58) gebildet sind,
eine Aufrolleinrichtung zum Aufrollen der Spulenmatte (10) auf das Fügewerkzeug (14) derart, dass die geradlinigen Drahtabschnitte (36-1, 36-2, 36-3) in die Fügewerkzeugnuten (58) eingeführt werden,
eine Überführungseinrichtung zum Einfügen des Fügewerkzeugs (14) in das Bauteil (16), Ausrichten der Fügewerkzeugnuten (58) mit den Aufnahmenuten (24) und Überführen der geradlinigen Drahtabschnitte (36-1, 36-2, 36-3) von den Fügewerkzeugnuten (58) in die Aufnahmenuten (24),
und eine Steuerung (46), die dazu eingerichtet ist, den Nutabstand der Fügewerkzeugnuten (58) zwischen einem Aufrollen des ersten Längsabschnittes (60-1) auf das Fügewerkzeug (14) und einem Aufrollen des zweiten Längsabschnittes (60-2) auf das Fügewerkzeug (14) zur Anpassung an den zweiten Drahtabstand zu verändern und das Fügewerkzeug (14) nach dem Aufrollen auf einen kleineren Durchmesser (D1) einzufahren, mit dem das Fügewerkzeug (14) in das Bauteil (16) eintauchen kann, um dann die geradlinigen Drahtabschnitte (36-1, 36-2, 36-3) in die Aufnahmenuten (24) zu überführen.

9. Vorrichtung (40) nach Anspruch 8,
gekennzeichnet,
9.1 dadurch, dass das Fügewerkzeug (14) segmentartige Greifelemente (68) aufweist, die radial verschiebbar sind und dass die Steuerung (46) dazu eingerichtet ist, die Greifelemente (68) radial zu verstellen, um die Nutbreite, den Außenumfang und den Nutabstand zu verändern und/oder
9.2 dadurch, dass der Durchmesser des Fügewerkzeugs (14) an dem Außenumfangbereich (64) veränderbar ist, um den Nutabstand zu verändern und/oder
9.3 durch eine Fügewerkzeugbewegungseinrichtung (56) zum relativen Bewegen der Drehachse (66) des Fügewerkzeugs (14) zu der Spulenmatte (10), wobei die Steuerung (46) dazu eingerichtet ist, den Abstand der Drehachse (66) des Fügewerkzeugs (14) zu einem noch aufzurollenden Abschnitt der Spulenmatte (10) abhängig von einer Änderung des Durchmessers des Außenumfangbereichs (64) anzupassen.

10. Vorrichtung (40) nach einem der Ansprüche 8 oder 9,
**dadurch gekennzeichnet,**
**dass** die Steuerung (46) dazu eingerichtet ist, zum Fixieren wenigstens eines Bereichs der Spulenmatte (10) in dem Fügewerkzeug (14) die Nutbreite wenigstens einiger oder aller der Fügewerkzeugnuten (58) zu verkleinern, um darin eingefügte Drahtabschnitte (36-1, 36-2, 36-3) festzuhalten und/oder zum Lösen der Spulenmatte (10) die Nutbreite zu vergrößern, um darin festgehaltene Drahtabschnitte (36-1, 36-2, 36-3) zu lösen.

11. Vorrichtung (40) nach Anspruch 10,
**dadurch gekennzeichnet**,
11.1 dass die Steuerung (46) dazu eingerichtet ist, die Nutbreiten zum Festklemmen von Drahtabschnitten (36-1, 36-2, 36-3) zwischen den Greifelementen (68) zu verkleinern, und/oder
11.2 dass wenigstens einige der Greifelemente (68) jeweils wenigstens einen Vorsprung aufweisen, der die zugeordnete Fügewerkzeugnut (58) im Öffnungsbereich verengt und dass die Steuerung (46) dazu eingerichtet ist, die Nutbreiten zum formschlüssigen Festhalten von Drahtabschnitten (36-1, 36-2, 36-3) hinter den Vorsprüngen der Greifelemente (68) zu verkleinern, und/oder
11.3 dass das Fügewerkzeug (14) gemäß einer der Alternativen 9.1 oder 9.2 von Anspruch 9 ausgebildet ist und der Verstellbereich des Durchmessers des Außenumfangs des Fügewerkzeugs (14) mehr als 1% des Durchmessers beträgt, um ein Verklemmen und Lösen der Drahtabschnitte (36-1, 36-2, 36-3) zwischen den Greifelementen (68) zu bewirken, und/oder
11.4 dass die Steuerung (46) dazu eingerichtet ist, das Festhalten der Drahtabschnitte (36-1, 36-2, 36-3) durch Verkleinerung der Nut vor und während einer Überführung des Fügewerkzeugs (14) in das Bauteil (16) zu bewirken.

12. Vorrichtung (40) nach einem der Ansprüche 8 bis 11,
**dadurch gekennzeichnet,**
**dass** die Spulenmattenbereitstelleinrichtung (42) ein sich linear erstreckendes kammartiges Übertragungswerkzeug (12) zum Halten einer oder mehrerer Spulenmattenlagen einer Spulenmatte (10) oder mehrerer Teilmatten (28-1, 28-2, 28-3, 28-4) auf einer Kammstruktur (50) mit zwischen Zinken (52) der Kammstruktur (50) positionierten geradlinigen Drahtabschnitten (36-1, 36-2, 36-3) aufweist, wobei das kammartige Übertragungswerkzeug (12) relativ zu dem Fügewerkzeug (14) linear in Richtung seiner Erstreckungsrichtung bewegbar ist.

13. Vorrichtung (40) nach einem der Ansprüche 8 bis 12, **gekennzeichnet durch** eine
Datenverarbeitungseinheit mit einem darin geladenenen Computerprogrammprodukt oder Computerprogramm, umfassend maschinenlesbare Steueranweisungen, die die Vorrichtung (40) veranlassen, die Schritte des Verfahrens nach einem der Ansprüche 1 bis 7 durchzuführen.

14. Computerprogrammprodukt oder Computerprogramm umfassend maschinenlesbare Steueranweisungen, die, wenn in eine Datenverarbeitungseinheit der Vorrichtung (40) nach Anspruch 13 geladen, die Vorrichtung (40) veranlassen, die Schritte des Verfahrens nach einem der Ansprüche 1 bis 7 durchzuführen.

## Claims

1. Method for multi-layer insertion of a coil mat (10) into inwardly open receiving grooves (24) of an at least partially annular component (16) of an electric machine, the method comprising:
a) providing a coil mat (10) which has straight wire sections (36, 36-1, 36-2, 36-3) and winding heads (38) which connect straight wire sections (36, 36-1, 36-2, 36-3) such that a first length section (60-1) of the coil mat (10) intended for forming a first layer (26-1) of the coil mat (10) in the component (16) comprises first straight wire sections (36-1) spaced apart by a first wire spacing, and a second length section (60-2) of the coil mat (10) intended for forming a second layer (26-2) of the coil mat (10) in the component (16) comprises second straight wire sections (36-2) spaced apart by a different second wire spacing,
b) rolling up the first length section (60-1) of the coil mat (10) onto a joining tool (14) which is provided on an outer peripheral region (64) with gripping elements (68) which can be adjusted in position and between which outwardly open joining tool grooves (58) are formed, the first straight wire sections (36-1) being introduced into the joining tool grooves (58),
c) changing the groove spacing of the joining tool grooves (58) to adapt to the second wire spacing,
d) rolling up the second length section (60-2) of the coil mat (10) while inserting the second straight wire sections (36-2) into the joining tool grooves (58), and thereafter retracting the joining tool (14) to a smaller outer diameter (D1) with which the joining tool (14) can dive into the component (16);
f) inserting the joining tool (14) into the component (16) and aligning the joining tool grooves (58) with the receiving grooves (24),
g) transferring the straight wire sections (36, 36-1, 36-2, 36-3) from the joining tool grooves (58) into the receiving grooves (24).

2. Method according to claim 1,
**characterized by**
2.1 using a joining tool (14) with segment-like gripping elements (68) that can be displaced radially, and
radially adjusting the gripping elements (68) to change the groove width, the outer circumference, and the groove spacing and/or
2.2 changing the diameter of the joining tool (14) at the outer circumferential region (64) in order to change the groove spacing and/or
2.3 adjusting a distance of a rotational axis (66) of the joining tool (14) to a section of the coil mat (10) still to be rolled up, depending on a change in the diameter of the outer circumferential region (64).

3. Method according to any of the preceding claims,
**characterized by**
e1) fixing at least one region of the coil mat (10) in the joining tool (14) by reducing the groove width of at least some or all of the joining tool grooves (58) in order to hold wire sections (36-1, 36-2, 36-3) inserted therein and/or
e2) releasing the coil mat (10) from the joining tool (14) by increasing the groove width in order to release wire sections (36-1, 36-2, 36-3) held therein.

4. Method according to claim 3,
**characterized in that**
4.1 step e1) comprises at least one of the following steps:
e1.1) reducing the groove widths to clamp wire sections (36-1, 36-2, 36-3) between the gripping elements (68),
e1.2) reducing the groove widths to hold wire sections (36-1, 36-2, 36-3) in a form-fitting manner behind projections on gripping elements (68) at the opening of the joining tool grooves (58),
e.1.3) reducing the groove widths by performing at least one of the steps of claim 2 and reducing the diameter of the outer circumference of the joining tool (14) by more than 1%, and/or
4.2 that step e2) comprises:
increasing the groove widths by performing at least one of the steps of claim 2 and
increasing the diameter of the outer circumference by more than 1%,
and/or
4.3 that step e1) is performed before and/or during step f) and that step e2) is performed after step f) and before and/or during step g).

5. Method according to any of the preceding claims,
**characterized in that**
step a) comprises at least one or more of the steps:
a1) providing the coil mat (10) on a linearly extending comb-like transfer tool (12) such that one or more coil mat layers of a coil mat (10) or several partial mats (28-1, 28-2, 28-3, 28-4) are held on a comb structure (50) with straight wire sections (36, 36-1, 36-2, 36-3) positioned between tines (52) of the comb structure (50),
a2) providing the coil mat (10) such that a first straight wire section (36-1) is spaced apart at the end of the first longitudinal section (60-1) and a second straight wire section (36-2) is spaced apart at the beginning of the second longitudinal section (60-2) by a transition wire spacing the value of which is between the first wire spacing and the second wire spacing,
a3) providing the coil mat (10) such that the first straight wire section (36-1) at the end of the first length section (60-1) and the second straight wire section (36-2) at the beginning of the second length section (60-2) are spaced apart by a transition wire spacing the value of which corresponds to the mean value of the first wire spacing and the second wire spacing plus/minus 10%,
a4) providing the coil mat (10) such that the first wire spacing corresponds to the wire spacing of the first straight wire sections (36-1) during their intended use in the component (16) and such that the second wire spacing corresponds to the wire spacing of the second straight wire sections (36-2) during their intended use in the component (16).

6. Method according to any of the preceding claims, **characterized in that** step b) comprises at least one or more of the following steps:
b1) adjusting the groove spacing of the joining tool grooves (58) to the first wire spacing,
b2) rolling the joining tool (14) with its circular outer circumference over the linearly spread or linearly moving coil mat (10),
b3) rolling the joining tool (14) with its circular outer circumference over the linear transfer tool (12) moving linearly relative to the joining tool (14) in accordance with step a1) of claim 5,
b4) adjusting the distance of the outer circumference to the linear transfer tool (12) in accordance with step a1) of claim 5 by changing the distance of the axis of rotation (66) of the joining tool (14) to the linear transfer tool (12), and/or b5)
b5.1 radially moving the first wire sections (36-1) into the joining tool grooves (58) or
b5.2 adjusting the groove width to allow oblique threading (70) of the first wire sections (36-1) and inserting the first wire sections (36-1) by rolling them without moving them radially,
and/or that
step d) comprises at least one or more of the following steps:
d1) adjusting the groove spacing of the joining tool grooves (58) to the second wire spacing,
d2) rolling the joining tool (14) with its circular outer circumference over the linearly spread or linearly moving coil mat (10),
d3) rolling the joining tool (14) with its circular outer circumference over the linear transfer tool (12) moving linearly relative to the joining tool (14) in accordance with step a1) of claim 5,
d4) adjusting the distance between the outer circumference and the linear transfer tool (12) in accordance with step a1) of claim 5 by changing the distance between the axis of rotation (66) of the joining tool (14) and the linear transfer tool (12), and/or
d5)
d5.1 radially moving the second wire sections (36-2) into the joining tool grooves (58) or
d5.2 adjusting the groove width to allow oblique threading (70) of the second wire sections (36-2) and inserting the second wire sections (36-2) by rolling them without moving them radially.

7. Method according to any of the preceding claims, **characterized in that** step c) comprises at least one or more of the following steps:
c1) changing the groove spacing to adjust to the transition wire spacing according to step a2) or a3) of claim 5 and then changing the groove spacing to adjust to the second wire spacing,
c2) changing the groove spacing during a stop of the relative linear movement between the joining tool (14) and the coil mat (10),
c3) changing the groove spacing during continuous relative linear movement between the joining tool (14) and the coil mat (10),
c4) changing the groove spacing depending on the geometry of the coil mat (10).

8. Device (40) for multi-layer insertion of a coil mat (10) into inwardly open receiving grooves (24) of an at least partially annular component (16) of an electric machine, the device comprising:
a coil mat providing device (42) for providing a coil mat (10) which has straight wire sections (36-1, 36-2, 36-3) and winding heads (38) which connect straight wire sections (36-1, 36-2, 36-3) such that a first length section (60-1) of the coil mat (10) intended for forming a first layer (26-1) of the coil mat (10) in the component (16) has first straight wire sections (36-1) spaced apart by a first wire spacing, and a second length section (60-2) of the coil mat (10) intended for forming a second layer (26-2) of the coil mat (10) in the component (16) has second straight wire sections (36-2) spaced apart by a different second wire spacing,
a joining tool (14) which is rotatable about an axis of rotation (66) relative to the coil mat (10) and/or the component (16) and is provided at an outer circumferential region (64) with gripping elements (68) which are adjustable in position, between which outwardly open joining tool grooves (58) are formed,
a roll-up device for rolling the coil mat (10) onto the joining tool (14) in such a way that the straight wire sections (36-1, 36-2, 36-3) are introduced into the joining tool grooves (58),
a transfer device for inserting the joining tool (14) into the component (16), aligning the joining tool grooves (58) with the receiving grooves (24) and transferring the straight wire sections (36-1, 36-2, 36-3) from the joining tool grooves (58) into the receiving grooves (24),
and a control unit (46) which is designed to change the groove spacing of the joining tool grooves (58) between rolling-up the first longitudinal section (60-1) onto the joining tool (14) and rolling-up the second longitudinal section (60-2) onto the joining tool (14) for adjustment to the second wire spacing and, after rolling-up, to retract the joining tool (14) to a smaller diameter (D1) with which the joining tool (14) can dive into the component (16) in order to then transfer the straight wire sections (36-1, 36-2, 36-3) into the receiving grooves (24).

9. Device (40) according to claim 8,
**characterized in that**
9.1 the joining tool (14) has segment-like gripping elements (68) which are radially displaceable and **in that** the control unit (46) is configured to radially adjust the gripping elements (68) in order to change the groove width, the outer circumference, and the groove spacing and/or
9.2 the diameter of the joining tool (14) is variable at the outer circumferential region (64) in order to change the groove spacing and/or characterized
9.3 by a joining tool movement means (56) for moving the axis of rotation (66) of the joining tool (14) relative to the coil mat (10), wherein the control unit (46) is configured to adjust the distance of the axis of rotation (66) of the joining tool (14) to a section of the coil mat (10) still to be rolled up, depending on a change in the diameter of the outer circumferential region (64).

10. Device (40) according to any of claims 8 or 9,
**characterized in that**
the control unit (46) is configured to reduce the groove width of at least some or all of the joining tool grooves (58) in order to fix at least one region of the coil mat (10) in the joining tool (14) in order to hold wire sections (36-1, 36-2, 36-3) held therein and/or to increase the groove width for releasing the coil mat (10) in order to release wire sections (36-1, 36-2, 36-3) held therein.

11. Device (40) according to claim 10,
**characterized in that**
11.1 the control unit (46) is configured to reduce the groove widths for clamping wire sections (36-1, 36-2, 36-3) between the gripping elements (68),
and/or
11.2 at least some of the gripping elements (68) each have at least one projection which narrows the associated joining tool groove (58) in the opening area, and the control (46) unit is configured to reduce the groove widths for form-fitting retention of wire sections (36-1, 36-2, 36-3) behind the projections of the gripping elements (68), and/or
11.3 that the joining tool (14) is designed according to one of alternatives 9.1 or 9.2 of claim 9 and the adjustment range of the diameter of the outer circumference of the joining tool (14) is more than 1% of the diameter in order to prevent the wire sections (36-1, 36-2, 36-3) from jamming and coming loose between the gripping elements (68) and/or
11.4 that the control unit (46) is designed to cause the wire sections (36-1, 36-2, 36-3) to be held by reducing the size of the groove before and during transfer of the joining tool (14) into the component (16).

12. Device (40) according to any one of claims 8 to 11,
**characterized in that**
the coil mat providing device (42) has a linearly extending comb-like transfer tool (12) for holding one or more coil mat layers of a coil mat (10) or of one or more partial mats (28-1, 28-2, 28-3, 28-4) on the comb structure (50) with straight wire sections (36-1, 36-2, 36-3) positioned between tines (52) of the comb structure (50), wherein the comb-like transfer tool (12) is movable linearly relative to the joining tool (14) in the direction of its extension.

13. Device (40) according to any of claims 8 to 12,
**characterized by** a
data processing unit with a computer program product or computer program loaded therein, comprising machine-readable control instructions which cause the device (40) to perform the steps of the method according to any one of claims 1 to 7.

14. Computer program product or computer program comprising machine-readable control instructions which when loaded into a data processing unit of the device (40) according to claim 13 cause the device (40) to perform the steps of the method according to one of claims 1 to 7.

## Revendications

1. Procédé pour l'insertion multicouche d'un mat de bobine (10) dans des rainures de réception (24) ouvertes vers l'intérieur d'un composant (16) au moins partiellement annulaire d'une machine électrique, le procédé comprenant:
a) fournir un mat de bobine (10) qui comporte des sections de fil droit (36, 36-1, 36-2, 36-3) et des têtes d'enroulement (38) qui relient les sections de fil droit (36, 36-1, 36-2, 36-3) de telle sorte qu'une première section de longueur (60-1) du mat de bobine (10) destinée à former une première couche (26-1) du mat de bobine (10) dans le composant (16) comporte des premières sections de fil droit (36-1) espacées par un premier espacement de fil, et une deuxième section longitudinale (60-2) du mat de bobine (10) destinée à former une deuxième couche (26-2) du mat de bobine (10) dans le composant (16) comporte des deuxièmes sections de fil droit (36-2) espacées par un deuxième espacement de fils différent,
b) enrouler la première section longitudinale (60-1) du mat de bobine (10) sur un outil d'assemblage (14) qui est muni, sur une zone périphérique extérieure (64), d'éléments de préhension (68) réglables en position et entre lesquels sont formées des rainures d'outil d'assemblage (58) ouvertes vers l'extérieur, les premières sections de fil droit (36-1) étant introduites dans les rainures d'outil d'assemblage (58),
c) modifier l'espacement des rainures de l'outil d'assemblage (58) pour l'adapter au deuxième espacement des fils,
d) enrouler la deuxième section de longueur (60-2) du mat de bobine (10) tout en insérant les deuxièmes sections de fil droit (36-2) dans les rainures d'outil d'assemblage (58), puis en rétractant l'outil d'assemblage (14) jusqu'à un diamètre extérieur plus petit (D1) avec lequel l'outil d'assemblage (14) peut plonger dans le composant (16);
f) insérer l'outil d'assemblage (14) dans le composant (16) et aligner les rainures d'outil d'assemblage (58) avec les rainures de réception (24),
g) transférer les sections de fil droit (36, 36-1, 36-2, 36-3) des rainures d'outil d'assemblage (58) dans les rainures de réception (24).

2. Procédé selon la revendication 1,
**caractérisé par**
2.1 l'utilisation d'un outil d'assemblage (14) avec des éléments de préhension (68) en forme de segments pouvant être déplacés radialement,
et le réglage radial des éléments de préhension (68) pour modifier la largeur des rainures, la circonférence extérieure et l'espacement des rainures et/ou
2.2 la modification du diamètre de l'outil d'assemblage (14) au niveau de la zone périphérique extérieure (64) afin de modifier l'espacement des rainures et/ou
2.3 l'ajustement d'une distance entre un axe de rotation (66) de l'outil d'assemblage (14) et une section du mat de bobine (10) qui doit encore être enroulée, en fonction d'une modification du diamètre de la zone périphérique extérieure (64).

3. Procédé selon l'une quelconque des revendications précédentes,
**caractérisé par**
e1) la fixation d'au moins une région du mat de bobine (10) dans l'outil d'assemblage (14) en réduisant la largeur des rainures d'au moins certaines ou de toutes les rainures d'outil d'assemblage (58) afin de maintenir les sections de fil (36-1, 36-2, 36-3) insérées dans celles-ci et/ou
e2) libérer le mat de bobine (10) de l'outil d'assemblage (14) en augmentant la largeur des rainures afin de libérer les sections de fil (36-1, 36-2, 36-3) maintenues dans celles-ci.

4. Procédé selon la revendication 3,
**caractérisé en ce que**
4.1 l'étape e1) comprend au moins l'une des étapes suivantes:
e1.1) réduire les largeurs de rainure pour serrer les sections de fil (36-1, 36-2, 36-3) entre les éléments de préhension (68),
e1.2) réduire les largeurs de rainure pour maintenir les sections de fil (36-1, 36-2, 36-3) par liaison de forme derrière des saillies sur les éléments de préhension (68) à l'ouverture des rainures de l'outil d'assemblage (58),
e.1.3) réduire les largeurs de rainure en effectuant au moins l'une des étapes de la revendication 2 et en réduisant le diamètre de la périphérie extérieure de l'outil d'assemblage (14) de plus de 1 %,
et/ou que
4.2 l'étape e2) comprend:
augmenter les largeurs de rainure en effectuant au moins l'une des étapes de la revendication 2 et en augmentant le diamètre de la périphérie extérieure de plus de 1 %, et/ou
4.3 que l'étape e1) est réalisée avant et/ou pendant l'étape f) et que l'étape e2) est réalisée après l'étape f) et avant et/ou pendant l'étape g).

5. Procédé selon l'une quelconque des revendications précédentes,
**caractérisé en ce que**
l'étape a) comprend au moins une ou plusieurs des étapes suivantes:
a1) fournir le mat de bobine (10) sur un outil de transfert (12) en forme de peigne s'étendant linéairement de telle sorte qu'une ou plusieurs couches de mat de bobine d'un mat de bobine (10) ou plusieurs mats partiels (28-1, 28-2, 28-3, 28-4) sont maintenues sur une structure en peigne (50) avec des sections de fil droit (36, 36-1, 36-2, 36-3) positionnées entre les dents (52) de la structure en peigne (50),
a2) fournir le mat de bobine (10) de telle sorte qu'une première section de fil droit (36-1) est espacée à l'extrémité de la première section longitudinale (60-1) et une deuxième section de fil droit (36-2) est espacée au début de la deuxième section longitudinale (60-2) par un espacement de fil de transition dont la valeur est comprise entre le premier espacement de fil et le deuxième espacement de fil,
a3) fournir le mat de bobine (10) de telle sorte que la première section de fil droit (36-1) à l'extrémité de la première section longitudinale (60-1) et la deuxième section de fil droit (36-2) au début de la deuxième section longitudinale (60-2) soient espacées par un espacement de fil de transition dont la valeur correspond à la valeur moyenne du premier espacement de fils et du deuxième espacement de fils plus ou moins 10 %,
a4) fournir le mat de bobine (10) de telle sorte que le premier espacement de fil corresponde à l'espacement de fil des premières sections de fil droites (36-1) lors de leur utilisation prévue dans le composant (16) et de telle sorte que le deuxième espacement de fil corresponde à l'espacement de fil des deuxièmes sections de fil droites (36-2) lors de leur utilisation prévue dans le composant (16).

6. Procédé selon l'une quelconque des revendications précédentes, **caractérisé en ce que**
l'étape b) comprend au moins une ou plusieurs des étapes suivantes:
b1) ajuster l'espacement de rainure des rainures d'outil d'assemblage (58) au premier espacement de fil,
b2) rouler l'outil d'assemblage (14) avec sa circonférence extérieure circulaire à travers le mat de bobine (10) disposé linéairement ou se déplaçant linéairement,
b3) rouler l'outil d'assemblage (14) avec sa circonférence extérieure circulaire à travers l'outil de transfert linéaire (12) se déplaçant linéairement par rapport à l'outil d'assemblage (14) conformément à l'étape a1) de la revendication 5,
b4) ajuster la distance entre la circonférence extérieure et l'outil de transfert linéaire (12) conformément à l'étape a1) de la revendication 5 en modifiant la distance entre l'axe de rotation (66) de l'outil d'assemblage (14) et l'outil de transfert linéaire (12), et/ou
b5)
b5.1 déplacer radialement les premières sections de fil (36-1) dans les rainures d'outil d'assemblage (58) ou
b5.2 ajuster la largeur de rainure pour permettre un enfilage oblique (70) des premières sections de fil (36-1) et insérer les premières sections de fil (36-1) en les
faisant rouler sans les déplacer radialement,
et/ou
que l'étape d) comprend au moins une ou plusieurs des étapes suivantes:
d1) ajuster l'espacement de rainure de l'outil d'assemblage (58) à l'espacement des deuxièmes fils,
d2) rouler l'outil d'assemblage (14) avec sa circonférence extérieure circulaire à travers le mat de bobine (10) étendu linéairement ou se déplaçant linéairement,
d3) rouler l'outil d'assemblage (14) avec sa circonférence extérieure circulaire à travers l'outil de transfert linéaire (12) se déplaçant linéairement par rapport à l'outil d'assemblage (14) conformément à l'étape a1) de la revendication 5,
d4) ajuster la distance entre la circonférence extérieure et l'outil de transfert linéaire (12) conformément à l'étape a1) de la revendication 5 en modifiant la distance entre l'axe de rotation (66) de l'outil d'assemblage (14) et l'outil de transfert linéaire (12), et/ou
d5)
d5.1 déplacer radialement les deuxièmes sections de fil (36-2) dans les rainures d'outil d'assemblage (57) ou
d5.2 ajuster la largeur des rainures pour permettre un enfilage oblique (70) des deuxièmes sections de fil (36-2) et insérer les deuxièmes sections de fil (36-2) en les faisant rouler sans les déplacer radialement.

7. Procédé selon l'une quelconque des revendications précédentes, **caractérisé en ce que**
l'étape c) comprend au moins une ou plusieurs des étapes suivantes:
c1) modifier l'espacement de rainure pour l'adapter à l'espacement de fil de transition conformément à l'étape a2) ou a3) de la revendication 5, puis modifier l'espacement de rainure pour l'adapter au second espacement de fil,
c2) modifier l'espacement de rainure pendant un arrêt du mouvement linéaire relatif entre l'outil d'assemblage (14) et le mat de bobine (10),
c3) modifier l'espacement de rainure pendant un mouvement linéaire relatif continu entre l'outil d'assemblage (14) et le mat de bobine (10),
c4) modifier l'espacement de rainure en fonction de la géométrie du mat de bobine (10).

8. Dispositif (40) pour l'insertion multicouche d'un mat de bobine (10) dans des rainures de réception (24) ouvertes vers l'intérieur d'un composant (16) d'une machine électrique, le dispositif comprenant:
un dispositif (42) de fourniture d'un mat de bobine pour fournir un mat de bobine (10) qui comporte des sections de fil droit (36-1, 36-2, 36-3) et des têtes d'enroulement (38) qui relient les sections de fil droites (36-1, 36-2, 36-3) de telle sorte qu'une première section de longueur (60-1) du mat de bobine (10) destinée à former une première couche (26-1) du mat de bobine (10) dans le composant (16) comporte des premières sections de fil droites (36-1) espacées d'un premier espacement de fil, et une deuxième section de longueur (60-2) du mat de bobine (10) destinée à former une deuxième couche (26-2) du mat de bobine (10) dans le composant (16) comporte des deuxièmes sections de fil droit (36-2) espacées d'un deuxième espacement de fil différent,
un outil d'assemblage (14) qui peut tourner autour d'un axe de rotation (66) par rapport au mat de bobine (10) et/ou au composant (16) et qui est muni, dans une zone périphérique extérieure (64), d'éléments de préhension (68) réglables en position, entre lesquels sont formées des rainures d'outil d'assemblage (58) ouvertes vers l'extérieur,
un dispositif d'enroulement pour enrouler le mat de bobine (10) sur l'outil d'assemblage (14) de telle sorte que les sections de fil droit (36-1, 36-2, 36-3) soient introduites dans les rainures d'outil d'assemblage (58),
un dispositif de transfert pour insérer l'outil d'assemblage (14) dans le composant (16), aligner les rainures d'outil d'assemblage (58) avec les rainures de réception (24) et transférer les sections de fil droites (36-1, 36-2, 36-3) des rainures d'outil d'assemblage (58) dans les rainures de réception (24),
et une unité de commande (46) qui est conçue pour modifier l'espacement de rainure des rainures d'outil d'assemblage (58) entre l'enroulement de la première section longitudinale (60-1) sur l'outil d'assemblage (14) et l'enroulement de la deuxième section longitudinale (60-2) sur l'outil d'assemblage (14) pour l'ajuster au deuxième espacement de fil et, après l'enroulement, pour rétracter l'outil d'assemblage (14) à un diamètre plus petit (D1) avec lequel l'outil d'assemblage (14) peut plonger dans le composant (16) afin de transférer ensuite les sections de fil droites (36-1, 36-2, 36-3) dans les rainures de réception (24).

9. Dispositif (40) selon la revendication 8,
caractérisé
9.1 en ce que l'outil d'assemblage (14) comporte des éléments de préhension (68) en forme de segments qui sont déplaçables radialement et en ce que l'unité de commande (46) est configurée pour ajuster radialement les éléments de préhension (68) afin de modifier la largeur des rainures, la périphérie extérieure et l'espacement de rainure et/ou
9.2 en ce que le diamètre de l'outil d'assemblage (14) est variable au niveau de la zone périphérique extérieure (64) afin de modifier l'espacement de rainure et/ou
9.3 par un dispositif de déplacement de l'outil d'assemblage (56) pour déplacer l'axe de rotation (66) de l'outil d'assemblage (14) par rapport au mat de bobine (10), dans lequel l'unité de commande (46) est configurée pour ajuster la distance de l'axe de rotation (66) de l'outil d'assemblage (14) par rapport à une section du mat de bobine (10) qui doit encore être enroulée en fonction d'une modification du diamètre de la zone périphérique extérieure (64).

10. Dispositif (40) selon l'une quelconque des revendications 8 ou 9,
**caractérisé en ce que**
l'unité de commande (46) est configurée pour réduire la largeur de rainure d'au moins certaines ou de toutes les rainures d'outil d'assemblage (58) afin de fixer au moins une zone du mat de bobine (10) dans l'outil d'assemblage (14) afin de maintenir des sections de fil (36-1, 36-2, 36-3) maintenues dans celui-ci et/ou pour augmenter la largeur des rainures afin de libérer le mat de bobine (10) afin de libérer les sections de fil (36-1, 36-2, 36-3) maintenues dans celui-ci.

11. Dispositif (40) selon la revendication 10,
**caractérisé en ce que**
11.1 l'unité de commande (46) est configurée pour réduire les largeurs de rainure pour serrer les sections de fil (36-1, 36-2, 36-3) entre les éléments de préhension (68),
et/ou
11.2 au moins certains des éléments de préhension (68) comportent chacun au moins une saillie qui rétrécit la rainure d'outil d'assemblage associée (58) dans la zone d'ouverture, et l'unité de commande (46) est configurée pour réduire les largeurs de rainure pour le maintien par complémentarité de forme des sections de fil (36-1, 36-2, 36-3) derrière les saillies des éléments de préhension (68), et/ou
11.3 que l'outil d'assemblage (14) est conçu selon l'une des alternatives 9.1 ou 9.2 de la revendication 9 et que la plage de réglage du diamètre de la périphérie extérieure de l'outil d'assemblage (14) est supérieure à 1 % du diamètre afin d'empêcher les sections de fil (36-1, 36-2, 36-3) de se coincer et de se détacher entre les éléments de préhension (68)
et/ou
11.4 que l'unité de commande (46) est conçue pour maintenir les sections de fil (36-1, 36-2, 36-3) en place en réduisant la taille de la rainure avant et pendant le transfert de l'outil d'assemblage (14) dans le composant (16).

12. Dispositif (40) selon l'une quelconque des revendications 8 à 11,
**caractérisé en ce que**
le dispositif de fourniture de mat de bobine (42) comporte un outil de transfert (12) en forme de peigne s'étendant linéairement pour maintenir une ou plusieurs couches de mat de bobine (10) ou d'un ou plusieurs mats de bobine partiels (28-1, 28-2, 28-3, 28-4) sur la structure en peigne (50) avec des sections de fil droit (36-1, 36-2, 36-3) positionnées entre les dents (52) de la structure en peigne (50), dans lequel l'outil de transfert en forme de peigne (12) est mobile linéairement par rapport à l'outil d'assemblage (14) dans la direction de son extension.

13. Dispositif (40) selon l'une quelconque des revendications 8 à 12,
**caractérisé par** une
unité de traitement de données avec un produit logiciel ou un programme informatique chargé dans celle-ci, comprenant des instructions de commande lisibles par machine qui amènent le dispositif (40) à exécuter les étapes du procédé selon l'une quelconque des revendications 1 à 7.

14. Produit logiciel ou programme informatique comprenant des instructions de commande lisibles par machine qui, lorsqu'elles sont chargées dans une unité de traitement de données du dispositif (40) selon la revendication 13, font que le dispositif (40) exécute les étapes du procédé selon l'une des revendications 1 à 7.
